(19) Europäisches Patentamt
European Patent Office
Office européen des brevets

(11) **EP 3 882 132 B1**

(12) **FASCICULE DE BREVET EUROPEEN**

(45) Date de publication et mention
de la délivrance du brevet:
**13.07.2022  Bulletin 2022/28**

(21) Numéro de dépôt: **21152127.3**

(22) Date de dépôt: **18.01.2021**

(51) Classification Internationale des Brevets (IPC):
**B64C 11/30** *(2006.01)*    **B64C 27/26** *(2006.01)*
**B64C 27/57** *(2006.01)*    **B64D 35/04** *(2006.01)*

(52) Classification Coopérative des Brevets (CPC):
**B64C 27/26; B64C 11/305; B64C 27/57;
B64D 35/04;** B64C 2027/8281

(54) **PROCÉDÉ DE PROTECTION EN COUPLE ET/OU EN POUSSÉE D'HÉLICES D'UN HÉLICOPTÈRE HYBRIDE ET HÉLICOPTÈRE HYBRIDE**

VERFAHREN ZUM SCHUTZ DES DREHMOMENTES UND/ODER SCHUBES VON PROPELLERN EINES HYBRIDHUBSCHRAUBERS UND HYBRIDHUBSCHRAUBER

METHOD FOR PROTECTING THE TORQUE AND/OR THRUST OF PROPELLERS OF A HYBRID HELICOPTER AND HYBRID HELICOPTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.03.2020  FR 2002653**

(43) Date de publication de la demande:
**22.09.2021  Bulletin 2021/38**

(73) Titulaire: **Airbus Helicopters
13725 Marignane Cedex (FR)**

(72) Inventeurs:
• **EGLIN, Paul
13830 Roquefort la Bedoule (FR)**
• **HUOT, Rémy
13008 Marseille (FR)**

(74) Mandataire: **GPI Brevets
1330, rue Guillibert de la Lauzière
EuroParc de Pichaury
Bât B2
13856 Aix en Provence Cedex 3 (FR)**

(56) Documents cités:
**EP-A1- 2 258 615    EP-A1- 2 574 547
EP-B1- 2 258 615    EP-B1- 2 574 547
FR-A1- 2 946 315    US-A1- 2008 237 392**

**Description**

La présente invention concerne un procédé de protection en couple et/ou en poussée d'hélices d'un hélicoptère hybride et aussi un hélicoptère hybride appliquant ce procédé. L'invention se situe dans le domaine technique des systèmes de commande d'un hélicoptère hybride.

Le projet menant à cette invention a reçu un financement du programme de recherche et d'innovation Horizon 2020 de l'Union Européenne, dans le cadre de la convention de subvention CleanSky 2 N° GAM-FRC-2014-001 Issue E.

Un type de giravion est dénommé « hélicoptère hybride » par commodité en raison de sa spécificité. Un hélicoptère hybride comporte un fuselage portant au moins une voilure tournante munie d'un rotor, ce rotor étant dénommé « rotor de sustentation » par la suite par commodité et en raison d'au moins une de ses fonctions. Le rotor de sustentation participe au moins à la sustentation de l'aéronef voire à son avancement.

Un hélicoptère hybride comprend de plus au moins une hélice, possiblement de type hélice tractive ou propulsive. Par exemple, un hélicoptère hybride peut être pourvu d'au moins deux hélices agencées transversalement de part et d'autre du fuselage.

Par ailleurs, un hélicoptère hybride comporte une installation motrice pour mettre en mouvement chaque hélice et le rotor de sustentation, éventuellement en permanence hors cas de pannes ou d'essais.

Pour piloter un hélicoptère hybride, un pilote de l'hélicoptère hybride peut manœuvrer une première commande et une deuxième commande pour contrôler respectivement collectivement et cycliquement le pas des pales du rotor de sustentation, via une architecture mécanique et/ou électrique par exemple. La première commande est dénommée par commodité « commande de pas collectif » et prend souvent la forme d'un levier dit « levier de pas collectif ». La deuxième commande est dénommée par commodité « commande de pas cyclique » et prend souvent la forme d'un manche dit « manche cyclique ».

L'hélicoptère hybride comporte également au moins une commande de poussée agissant sur chaque hélice et contrôlant au moins en partie l'avancement de l'hélicoptère hybride. Cette au moins une commande de poussée est apte à modifier de façon commune la valeur de pas des pales de chaque hélice, via une architecture mécanique et/ou électrique par exemple.

L'hélicoptère hybride comporte aussi des fonctions de contrôle de direction notamment une commande de contrôle en lacet. Par exemple, une telle commande de contrôle en lacet peut comprendre un palonnier relié par une architecture mécanique et/ou électrique à chaque hélice.

Lorsqu'un hélicoptère hybride comporte au moins deux hélices situées de part et d'autre du fuselage, lesdites au moins deux hélices peuvent être commandées de manière différentielle pour participer d'une part à l'avancement de l'hélicoptère hybride et d'autre part au contrôle en lacet de l'hélicoptère hybride. Dans ce cas, le pas des pales de chaque hélice comporte une composante de pas moyen et une composante de pas différentiel. Ainsi, le premier pas des premières pales d'une première hélice peut être égal à la somme de la composante de pas moyen et de la composante de pas différentiel alors que le deuxième pas des deuxièmes pales d'une deuxième hélice peut être égal à la composante de pas moyen moins la composante de pas différentiel. En outre, la composante de pas moyen peut être égale à la demi-somme des premier et deuxième pas des deux hélices alors que la composante de pas différentiel peut être égale à la demi-différence des premier et deuxième pas des deux hélices.

Dès lors, la commande de la poussée est apte à modifier la valeur de la composante de pas moyen alors que la commande de contrôle en lacet est apte à modifier la valeur de la composante de pas différentiel de ces hélices, via un palonnier par exemple.

Par exemple, la commande de poussée peut prendre la forme d'un levier ou d'un bouton transmettant un signal analogique ou numérique, et électrique ou optique, à un ou plusieurs actionneurs. Selon un exemple, un tel bouton peut présenter trois états discrets à savoir un premier état dit « beep+ » requérant une augmentation de la valeur de la composante de pas moyen, un deuxième état dit « beep- » requérant une baisse de la valeur de la composante de pas moyen et un troisième état requérant de ne pas modifier la valeur de la composante de pas moyen. Le pas des pales des hélices est alors augmenté tant qu'un pilote positionne le bouton dans son premier état. Selon un autre exemple, le bouton peut prendre la forme d'une molette transmettant un signal analogique à au moins un actionneur pour régler finement la composante de pas moyen du pas des premières et deuxièmes pales.

Des exemples d'hélicoptères hybrides sont décrits dans les documents US 8181901, US 8170728, US 8052094 et US 8113460 par exemple.

En outre, le pas des hélices peut être borné pour garantir que l'hélicoptère hybride atteigne des objectifs de performances et/ou de manœuvrabilité et/ou de résistances à des charges aérodynamiques et afin d'éviter notamment de dépasser des limites aérodynamiques ou mécaniques de l'hélicoptère hybride.

Par exemple, le document FR 2946315 décrit un procédé de commande et de régulation du pas des pales de chaque hélice d'un hélicoptère hybride visant à protéger l'aéronef, et en particulier la chaîne de transmission mécanique entraînant en rotation chaque hélice. Ce procédé régule notamment le pas des pales de chaque hélice afin d'éviter le dépassement de limites mécaniques maximales relatives à la vitesse de rotation de ces pales, à la puissance consommée par chaque hélice ou encore au couple exercé dans la chaîne de transmission mécanique entraînant chaque hélice.

En outre, le document EP 2258615 décrit un dispositif d'aide au pilotage d'un hélicoptère hybride déterminant un pas moyen maximal applicable aux pales des hélices de l'hélicoptère hybride sans dépasser la puissance disponible pour ces hélices. Le pas moyen maximal est déterminé en fonction du pas moyen courant des pales des hélices, d'une puissance maximale apte à être délivrée par une installation motrice entraînant les hélices, d'une puissance courante délivrée par cette installation motrice et d'une relation déterminant un gradient de puissance en fonction du pas des hélices.

L'art plan technologique de l'invention comporte également les documents EP 2574547 et US 2008/0237392.

La présente invention a alors pour objet de proposer un procédé innovant visant à optimiser la protection de chaque hélice d'un hélicoptère hybride et/ou de la chaîne de transmission mécanique entraînant les pales de chaque hélice.

La présente invention est destinée aux aéronefs à voilure tournante munis d'au moins une hélice, à savoir les hélicoptères hybrides.

La présente invention vise également un hélicoptère hybride configuré pour la réalisation de ce procédé.

Ainsi, l'invention vise un procédé de protection en couple et/ou en poussée d'au moins une hélice d'un hélicoptère hybride, l'hélicoptère hybride comportant un rotor de sustentation et au moins une hélice, l'hélicoptère hybride comprenant un système de commande relié à des pales de ladite au moins une hélice, l'hélicoptère hybride ayant une commande de poussée configurée pour générer un ordre pour modifier un pas des pales de ladite au moins une hélice transmis au système de commande, lesdites pales de ladite au moins une hélice étant entraînées en rotation par une chaîne de transmission mécanique de l'hélicoptère hybride.

Ce procédé comporte l'étape suivante :

- maintien par le système de commande du pas des pales de ladite au moins une hélice dans au moins un domaine de commande relatif à une caractéristique de cette au moins une hélice et défini par des limites de cette caractéristique, cette caractéristique étant une poussée générée par cette au moins une hélice ou un couple exercé dans la chaîne de transmission mécanique de l'hélicoptère hybride.

La chaîne de transmission mécanique entraînant les pales de chaque hélice en rotation comporte par exemple un ou plusieurs moteurs thermiques et/ou électriques, une boîte de transmission principale de puissance, une ou plusieurs boîtes de transmission auxiliaire de puissance, des arbres de liaison et les arbres de transmission entraînant en rotation les pales de chaque hélice.

En outre, un hélicoptère hybride peut comporter un calculateur configuré pour la mise en œuvre du procédé selon l'invention.

Le calculateur peut être par exemple dédié à la réalisation de ce procédé selon l'invention ou bien partagé pour réaliser d'autres fonctions de l'aéronef et intégré à ce titre à un système avionique de l'aéronef. Le calculateur peut comporter par exemple au moins un processeur et au moins une mémoire, au moins un circuit intégré, au moins un système programmable ou bien au moins un circuit logique, ces exemples ne limitant pas la portée donnée à l'expression « calculateur ». La mémoire peut par exemple stocker un ou plusieurs segments de codes ou algorithmes afin de réaliser le procédé selon l'invention ainsi qu'une ou plusieurs bases de données.

Quelle que soit la manière de mettre en œuvre le procédé, le pas des pales de chaque hélice est borné à chaque instant pour être en permanence présent dans au moins un domaine de commande relatif à une caractéristique de cette hélice. Une caractéristique est par exemple une poussée générée par l'hélice ou bien un couple exercé dans la chaîne de transmission mécanique de l'hélicoptère hybride.

En outre, la poussée générée par une hélice peut être la poussée en tant que telle ou une poussée dite « réduite » égale à la poussée générée par l'hélice divisée par le produit $p.S.v^2$,

$\rho$ étant la masse volumique de l'air,
$S$, la surface cumulé des pales de l'hélice, et
v, la vitesse d'avancement de l'hélicoptère hybride.

Cette poussée réduite est avantageusement indépendante des conditions atmosphériques et notamment de la température et de la pression atmosphérique courante à l'extérieur de l'hélicoptère hybride.

Ainsi, un domaine de commande relatif à une caractéristique d'une hélice peut couvrir des valeurs autorisées de pas des pales de cette hélice en fonction de la vitesse d'avancement de l'hélicoptère hybride.

Chaque domaine de commande relatif à une caractéristique d'une hélice est borné par une limite haute et une limite basse de la caractéristique concernée dans un diagramme de commande présentant le pas des pales d'une hélice en abscisse et la caractéristique de l'hélice en ordonnée, ou inversement. Le diagramme de commande comporte un ensemble de courbes définissant la caractéristique en fonction du pas des pales de l'hélice, chaque courbe étant associée à une vitesse d'avancement de l'hélicoptère hybride ou bien à une plage de vitesses.

L'étape de maintien du pas dans le domaine de commande comporte alors les étapes suivantes à chaque itération :

- maintien du pas des pales en dessous de la limite haute en fonction de la vitesse d'avancement de l'hélicoptère hybride,
- maintien du pas des pales au dessus de la limite basse en fonction de la vitesse d'avancement de l'hélicoptère hybride.

Les limites haute et basse peuvent être incluses dans le domaine admissible du pas des pales. De fait, lors du maintien du pas des pales en dessous de la limite haute ou au dessus de la limite basse, le pas des pales peut être égal respectivement à la limite haute ou à la limite basse.

Les limites haute et basse d'une caractéristique d'une hélice peuvent être définies par essais, calculs et/ou simulations. De même, les courbes définissant la caractéristique en fonction du pas des pales de l'hélice et de la vitesse d'avancement de l'hélicoptère hybride peuvent être définies par essais, calculs et/ou simulations. Les limites basse et haute de chaque caractéristique ainsi que les courbes associées peuvent être stockées dans une ou plusieurs bases de données, par exemple dans une mémoire du calculateur ou une mémoire reliée au calculateur. Une base de données peut par exemple comporter des tableaux de valeurs, une suite d'instructions mathématiques ou encore une ou plusieurs équations correspondant à ces courbes et à ces limites basse et haute de chaque caractéristique. Une base de données peut également comporter un algorithme de simulation numérique mettant en relation notamment la caractéristique d'une hélice, le pas des pales et la vitesse d'avancement par rapport à l'air de l'hélicoptère hybride.

Lorsque la caractéristique d'une hélice est la poussée de l'hélice ou bien la poussée réduite, les limites haute et basse sont associées principalement à des limites aérodynamiques de l'hélice visant à éviter un décrochage aérodynamique des pales et, par suite, une baisse rapide de la poussée générée par cette hélice. Un tel décrochage aérodynamique des pales d'une hélice peut se produire aussi bien pour des valeurs de pas positives correspondant à la génération d'une poussée vers l'avant de l'hélicoptère hybride que pour des valeurs de pas négatives correspondant à la génération d'une poussée vers l'arrière de l'hélicoptère hybride. Lorsque les pales d'une hélice sont vrillées et/ou que leurs profils sont cambrés, le phénomène de décrochage n'intervient pas de façon symétrique pour les pas positifs et négatifs. Les limites haute et basse ne sont donc pas obligatoirement opposées.

Une marge, par exemple égale à 5 à 10 pourcents (5 à 10%) de la valeur de la limite, peut être utilisée par rapport à la valeur réelle de pas menant à un décrochage aérodynamique pour définir les limites haute et basse relatives à la poussée de l'hélice. Les limites haute et basse correspondent ainsi respectivement à une poussée maximale utilisable et une poussée minimale utilisable pour cette hélice sans risque de décrochage et donc sans risque de perte de poussée.

Lorsque la caractéristique d'une hélice est le couple exercé dans la chaîne de transmission mécanique entraînant les pales de l'hélice, les limites haute et basse sont associées à des limites mécaniques relatives à cette chaîne de transmission mécanique de l'hélicoptère hybride et correspondent à des pas des pales de l'hélice proches de provoquer une dégradation ou une rupture mécanique ou encore une fatigue mécanique susceptible de provoquer à terme une dégradation ou une rupture mécanique dans la chaîne de transmission mécanique. Les conséquences d'une telle dégradation ou rupture mécanique sont une baisse voire une perte de la poussée de l'hélice ainsi qu'éventuellement une dégradation ou une perte de fonctionnement au niveau du rotor de sustentation de l'hélicoptère hybride.

Cette dégradation ou rupture mécanique peut être par exemple une casse d'un arbre de transmission ou d'un arbre de liaison ou bien une casse d'engrenages à l'intérieur d'une boîte de transmission principale de puissance ou d'une boîte de transmission auxiliaire de puissance. Cette dégradation ou rupture mécanique peut aussi être la casse d'un élément fusible de la chaîne de transmission mécanique interdisant la transmission de toute puissance mécanique, mais protégeant les autres éléments de la chaîne de transmission mécanique.

Une telle dégradation ou rupture mécanique peut se produire pour des valeurs de pas positives correspondant à la génération d'une poussée vers l'avant ou bien pour des valeurs de pas correspondant à la génération d'une poussée vers l'arrière de l'hélicoptère hybride, l'hélice étant alors toujours motrice. Une telle dégradation ou rupture mécanique peut aussi se produire lors de la génération d'une puissance mécanique par le flux d'air balayant les pales de l'hélice, l'hélice étant alors génératrice de puissance. Les limites basse et haute peuvent être dans ce cas sensiblement opposées si la chaîne de transmission mécanique a été dimensionnée pour fonctionner de façon réversible, à savoir afin de transmettre une puissance mécanique à l'hélice et de recevoir une puissance mécanique de l'hélice de façon sensiblement similaire.

Généralement, la chaîne de transmission mécanique, et en particulier la boîte de transmission principale de puissance et chaque boîte de transmission auxiliaire de puissance, ont été conçues et dimensionnées afin de transmettre principalement une puissance mécanique d'un moteur vers une hélice. Dès lors, les engrenages de ces boîtes de transmission de puissance sont dimensionnés dans ce but avec des couples admissibles importants dans un sens de fonctionnement et n'ont de fait pas un comportement symétrique. En conséquence, les limites haute et basse de cette caractéristique ne sont alors pas opposées et la valeur absolue de la limite basse est significativement inférieure à la valeur absolue de la limite haute.

Là encore, une marge, par exemple égale à 5 à 10 pourcents (5 à 10%) de la valeur de la limite, peut être utilisée par rapport aux limites admissibles à la rupture mécanique de la chaîne de transmission mécanique pour définir les limites haute et basse relatives au couple exercé dans la chaîne de transmission mécanique. Les limites haute et basse correspondent ainsi respectivement à un couple maximum admissible et un couple minimum admissible pour cette hélice sans risque de dégradation ou de rupture mécanique de la chaîne de transmission mécanique de l'hélicoptère hybride.

Une limite haute ou basse peut être constante et de fait indépendante de la vitesse d'avancement par rapport à l'air de l'hélicoptère hybride. Par exemple, les limites haute et basse relatives au couple exercé dans la chaîne de transmission mécanique peuvent être constantes. Une limite haute ou basse peut également être variable en fonction de la vitesse d'avancement par rapport à l'air de l'hélicoptère hybride. Par exemple, les limites haute et basse relatives à la poussée d'une hélice peuvent être variables en fonction de la vitesse d'avancement par rapport à l'air de l'hélicoptère hybride.

Par la suite, la vitesse d'avancement par rapport à l'air de l'hélicoptère hybride est dénommée par commodité « vitesse d'avancement ».

De la sorte, le procédé selon l'invention peut permettre de protéger automatiquement la chaîne de transmission mécanique entraînant les pales d'une hélice en évitant le dépassement d'une limite haute ou basse relative au couple exercé dans cette chaîne de transmission mécanique en interdisant d'atteindre un pas des pales de l'hélice conduisant à un couple supérieur à un couple maximum admissible ou inférieur à un couple minimum admissible.

De même, le procédé selon l'invention peut permettre de protéger automatiquement la progression de l'hélicoptère hybride en évitant une baisse ou une perte de poussée d'une hélice due à un décrochage aérodynamique des pales de l'hélice.

Le procédé peut de plus comprendre une ou plusieurs des caractéristiques qui suivent.

Selon un aspect, le maintien du pas en dessous de la limite haute peut comporter, lorsque le pas des pales atteint la limite haute, l'étape suivante à chaque itération :

- interdiction d'une augmentation du pas en valeur absolue lorsque la vitesse d'avancement de l'hélicoptère hybride n'augmente pas au dessus de la vitesse d'avancement atteinte lorsque le pas des pales atteint la limite haute.

En effet, une augmentation du pas des pales d'une hélice à isovitesse d'avancement, alors que le pas courant de ces pales est sensiblement égal à la limite haute, entrainerait une valeur de pas supérieure à la limite haute. Le procédé évite avantageusement cette situation lorsque le pilote agit sur la commande de poussée de l'hélice afin d'augmenter la poussée et donc le pas des pales de l'hélice sans augmenter la vitesse d'avancement de l'hélicoptère hybride par rapport à ladite vitesse d'avancement atteinte lorsque le pas des pales atteint la limite haute.

A contrario, si la vitesse d'avancement augmente, sans modification du pas des pales de l'hélice, ce pas va s'écarter de la limite haute dans le domaine de commande. Le pilote peut donc ensuite augmenter ce pas s'il le souhaite, le procédé garantissant de rester en dessous de la limite haute. L'augmentation de la vitesse d'avancement sans modification de pas peut être obtenue par exemple en agissant sur le pas cyclique du rotor de sustentation ou bien en provoquant un vol en descente de l'hélicoptère hybride.

Selon un aspect, le maintien du pas en dessous de la limite haute peut comporter, lorsque le pas des pales atteint la limite haute, l'étape suivante à chaque itération :

- baisse du pas en valeur absolue lorsque la vitesse d'avancement de l'hélicoptère hybride diminue en dessous de la vitesse d'avancement atteinte lorsque le pas des pales atteint la limite haute.

En effet, une diminution de la vitesse d'avancement sans modification du pas des pales d'une hélice, alors que le pas courant de ces pales est sensiblement égal à la limite haute entrainerait une valeur de pas supérieure à la limite haute. Le procédé évite avantageusement cette situation en accompagnant la diminution de la vitesse d'avancement de l'hélicoptère hybride afin de maintenir le pas courant sensiblement égal à la limite haute. La diminution de la vitesse d'avancement sans modification de pas peut être obtenue par exemple en agissant sur le pas cyclique du rotor de sustentation ou bien en provoquant un vol en montée de l'hélicoptère hybride.

Selon un aspect, le maintien du pas au dessus de la limite basse peut comporter, lorsque le pas des pales atteint la limite basse, l'étape suivante à chaque itération :

- interdiction d'une baisse du pas lorsque la vitesse d'avancement de l'hélicoptère hybride ne diminue pas en dessous de la vitesse d'avancement atteinte lorsque le pas des pales atteint la limite basse.

En effet, une baisse du pas des pales d'une hélice à isovitesse d'avancement, alors que le pas courant de ces pales est sensiblement égal à la limite basse, entrainerait une valeur de pas inférieure à la limite basse. Le procédé évite avantageusement cette situation lorsque le pilote agit sur la commande de poussée de l'hélice afin de diminuer la poussée et donc le pas des pales de l'hélice sans diminuer la vitesse d'avancement de l'hélicoptère hybride par rapport la vitesse d'avancement atteinte lorsque le pas des pales atteint la limite basse.

A contrario, si la vitesse d'avancement diminue, sans modification du pas des pales de l'hélice, ce pas va s'écarter de la limite basse dans le domaine de commande et le pilote peut donc ensuite diminuer ce pas s'il le souhaite, le procédé garantissant de rester au dessus de la limite basse.

Selon un aspect, le maintien du pas au dessus de la limite basse peut comporter, lorsque le pas des pales atteint la limite basse, l'étape suivante à chaque itération :

- augmentation du pas lorsque la vitesse d'avancement de l'hélicoptère hybride augmente au dessus de la vitesse d'avancement atteinte lorsque le pas des pales atteint la limite basse.

En effet, une augmentation de la vitesse d'avancement sans modification du pas des pales d'une hélice, alors que le pas courant de ces pales est sensiblement égal à la limite basse entrainerait une valeur de pas inférieure à la limite basse. Le procédé évite avantageusement cette situation en accompagnant l'augmentation de la vitesse d'avancement d'une augmentation du pas afin de maintenir le pas courant sensiblement égal à la limite basse.

De la sorte, le procédé permet de protéger la chaîne de transmission mécanique entraînant les pales de chaque hélice et/ou la progression de l'hélicoptère quelle que soit la commande exercée par le pilote de l'hélicoptère hybride.

Selon un autre aspect, l'étape de maintien du pas dans le domaine de commande peut comporter, lorsque la caractéristique de l'hélice est le couple exercé dans la chaîne de transmission mécanique de l'hélicoptère hybride, les étapes suivantes à chaque itération :

- calcul d'un pas maximum $\beta_{Torque-max}$ des pales de l'hélice relatif à un couple maximum admissible pour une vitesse d'avancement courante de l'hélicoptère hybride, et

- calcul d'un pas minimum $\beta_{Torque-min}$ des pales de l'hélice relatif à un couple minimal admissible pour la vitesse d'avancement courante de l'hélicoptère hybride.

Le pas maximum $\beta_{Torque-max}$ et le pas minimum $\beta_{Torque-min}$ peuvent être définis, pour la vitesse d'avancement courante de l'hélicoptère hybride, sur le diagramme de commande par l'intersection respectivement de la limite haute et de la limite basse avec une courbe déterminant le couple en fonction du pas des pales de l'hélice. Le pas maximum $\beta_{Torque-max}$ et le pas minimum $\beta_{Torque-min}$ peuvent également être définis par un calculateur en fonction d'informations issues d'une base de données. Le couple minimal admissible est un couple défini négatif correspondant à la limite mécanique de fonctionnement de la chaîne de transmission mécanique lorsqu'une hélice est génératrice d'une puissance mécanique. Le couple maximal admissible est un couple défini positif correspondant à la limite mécanique de fonctionnement de la chaîne de transmission mécanique lorsqu'une hélice est consommatrice d'une énergie mécanique.

De même, l'étape de maintien du pas dans le domaine de commande comporte, lorsque la caractéristique de l'hélice est la poussée de l'hélice, les étapes suivantes à chaque itération :

- calcul d'un pas maximum $\beta_{Thrust-max}$ des pales de l'hélice relatif à une poussée maximale utilisable pour la vitesse d'avancement courante de l'hélicoptère hybride, et

- calcul d'un pas minimum $\beta_{Thrust-min}$ des pales de l'hélice relatif à une poussée minimale utilisable pour la vitesse d'avancement courante de l'hélicoptère hybride.

Le pas maximum $\beta_{Thrust-max}$ et le pas minimum $\beta_{Thrust-min}$ peuvent être définis, pour la vitesse d'avancement courante de l'hélicoptère hybride, sur le diagramme de commande par l'intersection respectivement de la limite haute et de la limite basse avec une courbe déterminant la poussée de l'hélice en fonction du pas des pales de l'hélice. Le pas maximum $\beta_{Thrust-max}$ et le pas minimum $\beta_{Thrust-min}$ peuvent aussi être définis par un calculateur en fonction d'informations issues d'une base de données.

Selon un aspect, le système de commande peut comporter un calculateur de pilotage recevant au moins un signal de commande de poussée directement ou indirectement de la commande de poussée, le calculateur de pilotage pilotant au moins un actionneur du système de commande. Le maintien du pas dans le domaine de commande comporte une étape de commande dudit au moins un actionneur par le calculateur de pilotage en fonction au moins d'une loi mémorisée ainsi qu'au moins du signal de commande de poussée. La loi mémorisée peut être issue d'une base de données et utilisée par le calculateur de pilotage.

Selon un aspect, l'étape de commande dudit au moins un actionneur par le calculateur de pilotage peut également utiliser le pas maximum $\beta_{Torque\text{-}max}$ relatif au couple maximum admissible et le pas minimum $\beta_{Torque\text{-}min}$ relatif au couple minimal admissible des pales de l'hélice pour la vitesse d'avancement courante de l'hélicoptère hybride.

L'étape de commande dudit au moins un actionneur par le calculateur de pilotage peut aussi utiliser le pas maximum $\beta_{Thrust\text{-}max}$ relatif à la poussée maximale utilisable et le pas minimum $\beta_{Thrust\text{-}min}$ relatif à la poussée minimale utilisable pour la vitesse d'avancement courante de l'hélicoptère hybride.

L'étape de commande dudit au moins un actionneur par le calculateur de pilotage peut enfin utiliser un signal de commande en lacet émis directement ou indirectement par une commande de contrôle en lacet agissant sur les pas des pales de chaque hélice, par exemple lorsque l'hélicoptère hybride comporte au moins deux hélices.

Selon un aspect, le procédé de protection en couple et en poussée d'au moins une hélice d'un hélicoptère hybride peut comporter des étapes supplémentaires visant à calculer un pas moyen global maximum $\beta_{TCC\text{-}Complete\text{-}max}$ et un pas moyen global minimum $\beta_{TCC\text{-}Complete\text{-}min}$ relatifs à la poussée utilisable et au couple admissible pour chaque hélice pour la vitesse d'avancement courante de l'hélicoptère hybride.

Lorsque l'hélicoptère hybride comporte une seule hélice, le procédé selon l'invention peut alors comporter les étapes suivantes à chaque itération :

- calcul d'un pas moyen global maximum $\beta_{TCC\text{-}Complete\text{-}max}$ relatif à la poussée maximale utilisable et au couple maximum admissible pour l'hélice pour la vitesse d'avancement courante de l'hélicoptère hybride, le pas moyen global maximum $\beta_{TCC\text{-}Complete\text{-}max}$ de l'hélice étant défini en fonction du pas maximum $\beta_{Thrust\text{-}max}$ de l'hélice relatif à la poussée maximale utilisable et du pas maximum $\beta_{Torque\text{-}max}$ relatif au couple maximum admissible de l'hélice, et
- calcul d'un pas moyen global minimum $\beta_{TCC\text{-}Complete\text{-}min}$ relatif à la poussée minimale utilisable et au couple minimum admissible pour l'hélice, pour la vitesse d'avancement courante de l'hélicoptère hybride, le pas moyen global minimum $\beta_{TCC\text{-}Complete\text{-}min}$ de l'hélice étant défini en fonction du pas minimum $\beta_{Thrust\text{-}min}$ relatif à la poussée minimale utilisable de l'hélice et du pas minimum $\beta_{Torque\text{-}min}$ relatif au couple minimal admissible de l'hélice.

Lorsque l'hélicoptère hybride comporte au moins deux hélices, le procédé selon invention peut alors comporter les étapes suivantes à chaque itération :

- calcul d'un pas moyen global maximum $\beta_{TCC\text{-}Complete\text{-}max}$ relatif à la poussée maximale utilisable et au couple maximum admissible pour les hélices pour la vitesse d'avancement courante de l'hélicoptère hybride, le pas moyen global maximum $\beta_{TCC\text{-}Complete\text{-}max}$ des hélices étant défini en fonction du pas maximum $\beta_{Thrust\text{-}max}$ relatif à la poussée maximale utilisable de chacune desdites hélices et du pas maximum $\beta_{Torque\text{-}max}$ relatif au couple maximum admissible de chacune desdites hélices, et

- calcul d'un pas moyen global minimum $\beta_{TCC\text{-}Complete\text{-}min}$ relatif à la poussée minimale utilisable et au couple minimum admissible pour les hélices pour la vitesse d'avancement courante de l'hélicoptère hybride, le pas moyen global minimum $\beta_{TCC\text{-}Complete\text{-}min}$ des hélices étant défini en fonction du pas minimum $\beta_{Thrust\text{-}min}$ de chacune des hélices relatif à la poussée minimale utilisable et du pas minimum $\beta_{Torque\text{-}min}$ relatif au couple minimal admissible de chacune des hélices.

Chaque pas moyen global minimum ou maximum correspond ainsi à la valeur de pas maximum ou minimum pouvant être commandé par la commande de poussée du système de commande de l'hélicoptère hybride. Chaque pas moyen global prend avantageusement en compte simultanément la limite relative à la poussée et au couple pour chaque hélice de l'hélicoptère hybride. Ainsi, si l'hélicoptère hybride comporte au moins deux hélices, chaque pas moyen global minimum ou maximum prend avantageusement en compte simultanément la limite relative à la poussée et au couple de toutes les hélices de l'hélicoptère hybride et constitue alors une limite de pas commune à toutes les hélices de l'hélicoptère hybride.

De plus, le système de commande comporte un calculateur de pilotage recevant au moins un signal de commande de poussée directement ou indirectement de la commande de poussée, le calculateur de pilotage pilotant au moins un actionneur du système de commande, le maintien du pas dans le domaine de commande comporte une étape de commande dudit au moins un actionneur par le calculateur de pilotage en fonction au moins d'une loi mémorisée ainsi qu'au moins du signal de commande de poussée, du pas moyen global maximum $\beta_{TCC\text{-}Complete\text{-}max}$ relatif à la poussée maximale utilisable et au couple maximum admissible, et du pas moyen global minimum $\beta_{TCC\text{-}Complete\text{-}min}$ relatif à la poussée minimale utilisable et au couple minimum admissible selon la vitesse d'avancement courante de l'hélicoptère hybride. La loi mémorisée peut être issue d'une base de données et utilisée par le calculateur de pilotage.

De la sorte, la commande de poussée de l'hélicoptère hybride est bornée par le pas moyen global maximum $\beta_{TCC\text{-}Complete\text{-}max}$ et le pas moyen global minimum $\beta_{TCC\text{-}Complete\text{-}min}$.

L'étape de commande dudit au moins un actionneur par le calculateur de pilotage peut aussi utiliser un signal de commande en lacet émis directement ou indirectement par une commande de contrôle en lacet agissant sur les pas des pales de chaque hélice, par exemple lorsque l'hélicoptère hybride comporte au moins deux hélices.

Selon un aspect, le pas moyen global maximum $\beta_{TCC\text{-}Complete\text{-}max}$ peut être égal à la valeur minimale parmi le pas maximum $\beta_{Thrust\text{-}max}$ relatif à la poussée maximale utilisable et le pas maximum $\beta_{Torque\text{-}max}$ relatif au couple maximum admissible de chaque hélice alors que le pas moyen global minimum $\beta_{TCC\text{-}Complete\text{-}min}$ est égal à la valeur maximale parmi le pas minimum $\beta_{Thrust\text{-}min}$ relatif à la poussée minimale utilisable et le pas minimum $\beta_{Torque\text{-}min}$ relatif au couple minimal admissible de chaque hélice.

Selon un aspect, lorsque l'hélicoptère hybride comporte une première hélice et une deuxième hélice, le système de commande étant relié à des premières pales de la première hélice et à des deuxièmes pales de la deuxième hélice, l'étape de calcul d'un pas moyen global maximum $\beta_{TCC\text{-}Complete\text{-}max}$ peut alors comporter les sous-étapes suivantes :

- mesure d'un premier pas courant $\beta_L$ des premières pales de la première hélice, et d'un deuxième pas courant $\beta_R$ des deuxièmes pales de la deuxième hélice, mesurés par exemple par des senseurs positionnés sur les commandes de vol de l'hélicoptère hybride ou bien sur les arbres de commande du pas de ces pales,
- calcul d'un premier pas de calcul maximum relatif à la poussée maximale utilisable pour la première hélice selon la relation suivante :

$$\beta_{TCC-L-Thrust-max} = \frac{\beta_{L-Thrust-max} + \beta_R}{2},$$

$\beta_{L\text{-}Thrust\text{-}max}$ étant le pas maximum des premières pales relatif à la poussée maximale utilisable pour la première hélice,
- calcul d'un deuxième pas de calcul maximum relatif à la poussée maximale utilisable pour la deuxième hélice selon la relation suivante :

$$\beta_{TCC-R-Thrust-max} = \frac{\beta_L + \beta_{R-Thrust-max}}{2},$$

$\beta_{R\text{-}Thrust\text{-}max}$ étant le pas maximum des deuxièmes pales relatif à la poussée maximale utilisable pour la deuxième hélice,
- calcul d'un pas moyen de calcul maximum relatif à la poussée maximale utilisable pour les deux hélices selon la relation suivante :

$$\beta_{TCC-Thrust-max-NODIFF} = \frac{\beta_{TCC-L-Thrust-max} + \beta_{TCC-R-Thrust-max}}{2},$$

- calcul d'un pas moyen maximum relatif à la poussée maximale utilisable pour les deux hélices selon la relation suivante :

$$\beta_{TCC-Thrust-max} = \beta_{TCC-Thrust-max-NODIFF} - ABS(\beta_{TCC-L-Thrust-max} - \beta_{TCC-R-Thrust-max}),$$

ABS étant la fonction extrayant la valeur absolue,
- calcul d'un premier pas de calcul maximum relatif au couple maximum admissible pour la première hélice selon la relation suivante :

$$\beta_{TCC-L-Torque-max} = \frac{\beta_{L-Torque-max} + \beta_R}{2},$$

$\beta_{L\text{-}Torque\text{-}max}$ étant le pas maximum des premières pales relatif au couple maximum admissible pour la première hélice,
- calcul d'un deuxième pas de calcul maximum relatif au couple maximum admissible pour la deuxième hélice selon

la relation suivante :

$$\beta_{\text{TCC−R−Torque−max}} = \frac{\beta_L + \beta_{\text{R−Torque−max}}}{2},$$

$\beta_{\text{R-Torque-max}}$ étant le pas maximum des deuxièmes pales relatif audit couple maximum admissible pour la deuxième hélice,

- calcul d'un pas moyen de calcul maximum relatif au couple maximum admissible pour les deux hélices selon la relation suivante :

$$\beta_{\text{TCC−Torque−max−NODIFF}} = \frac{\beta_{\text{TCC−L−Torque−max}} + \beta_{\text{TCC−R−Torque−max}}}{2},$$

- calcul d'un pas moyen maximum relatif au couple maximum admissible pour les deux hélices selon la relation suivante :

$$\beta_{\text{TCC−Torque−max}} = \beta_{\text{TCC−Torque−max−NODIFF}} - ABS\big(\beta_{\text{TCC−L−Torque−max}} - \beta_{\text{TCC−R−Torque−max}}\big),$$

- calcul du pas moyen global maximum relatif à la poussée maximale utilisable et au couple maximum admissible pour les deux hélices selon la relation suivante :

$$\beta_{\text{TCC−Complete−max}} = MIN\big(\beta_{\text{TCC−Thrust−max}}; \beta_{\text{TCC−Torque−max}}\big),$$

MIN étant la fonction extrayant la valeur minimale des deux arguments fournis en entrée.

L'étape de calcul d'un pas moyen global minimum $\beta_{\text{TCC-Complete-min}}$ comporte les sous-étapes suivantes :

- mesure du premier pas courant $\beta_L$ des premières pales de la première hélice et du deuxième pas courant $\beta_R$ des deuxièmes pales de la deuxième hélice, mesurés par exemple par des senseurs positionnés sur les commandes de vol de l'hélicoptère hybride ou bien sur les arbres de commande du pas des pales,
- calcul d'un premier pas de calcul minimum relatif à la poussée minimale utilisable pour chaque hélice selon la relation suivante :

$$\beta_{\text{TCC−L−Thrust−min}} = \frac{\beta_{\text{L−Thrust−min}} + \beta_R}{2},$$

$\beta_{\text{L-Thrust-min}}$ étant le pas minimum des premières pales relatif à la poussée minimale utilisable pour la première hélice,
- calcul d'un deuxième pas de calcul minimum relatif à la poussée minimale utilisable pour la deuxième hélice selon la relation suivante :

$$\beta_{\text{TCC−R−Thrust−min}} = \frac{\beta_L + \beta_{\text{R−Thrust−min}}}{2},$$

$\beta_{\text{R-Thrust-min}}$ étant le pas minimum des deuxièmes pales relatif à la poussée minimale utilisable pour la deuxième hélice,
- calcul d'un pas moyen de calcul minimum relatif à la poussée minimale utilisable pour les deux hélices selon la relation suivante :

$$\beta_{\text{TCC-Thrust-min-NODIFF}} = \frac{\beta_{\text{TCC-L-Thrust-min}} + \beta_{\text{TCC-R-Thrust-min}}}{2},$$

- calcul d'un pas moyen minimum relatif à la poussée minimale utilisable pour les deux hélices selon la relation suivante :

$$\beta_{\text{TCC-Thrust-min}} = \beta_{\text{TCC-Thrust-min-NODIFF}} + ABS(\beta_{\text{TCC-L-Thrust-min}} - \beta_{\text{TCC-R-Thrust-min}}),$$

- calcul d'un premier pas de calcul minimum relatif au couple minimum admissible pour la première hélice selon la relation suivante :

$$\beta_{\text{TCC-L-Torque-min}} = \frac{\beta_{\text{L-Torque-min}} + \beta_R}{2},$$

$\beta_{\text{L-Torque-min}}$ étant le pas minimum des premières pales relatif au couple minimum admissible pour la première hélice,
- calcul d'un deuxième pas de calcul minimum relatif au couple minimum admissible pour la deuxième hélice selon la relation suivante :

$$\beta_{\text{TCC-R-Torque-min}} = \frac{\beta_L + \beta_{\text{R-Torque-min}}}{2},$$

$\beta_{\text{R-Torque-min}}$ étant le pas minimum des deuxièmes pales relatif au couple minimum admissible pour la deuxième hélice,
- calcul d'un pas moyen de calcul minimum relatif au couple minimum admissible pour les deux hélices selon la relation suivante :

$$\beta_{\text{TCC-Torque-min-NODIFF}} = \frac{\beta_{\text{TCC-L-Torque-min}} + \beta_{\text{TCC-R-Torque-min}}}{2},$$

- calcul d'un pas moyen minimum relatif au couple minimum admissible pour les deux hélices selon la relation suivante :

$$\beta_{\text{TCC-Torque-min}} = \beta_{\text{TCC-Torque-min-NODIFF}} + ABS(\beta_{\text{TCC-L-Torque-min}} - \beta_{\text{TCC-R-Torque-min}}),$$

- calcul du pas moyen global minimum relatif à la poussée minimale utilisable et au couple minimum admissible pour les deux hélices selon la relation suivante :

$$\beta_{\text{TCC-Complete-min}} = MAX(\beta_{\text{TCC-Thrust-min}}; \beta_{\text{TCC-Torque-min}}),$$

MAX étant la fonction extrayant la valeur maximale des deux arguments fournis en entrée.

Selon un aspect, les étapes de calcul du pas moyen global maximum $\beta_{\text{TCC-Complete-max}}$ et du pas moyen global minimum $\beta_{\text{TCC-Complete-min}}$ peuvent comporter une étape de correction selon un taux de lacet de l'hélicoptère hybride, pour chacune des première et deuxième hélices, du pas maximum et du pas minimum relatifs à la poussée utilisable et du pas maximum et du pas minimum relatifs au couple admissible pour chacune des première et deuxième hélices de sorte que :

- les premier et deuxième pas maximum relatifs à la poussée maximale utilisable sont remplacés pour chacune des deux hélices respectivement par

$$\beta_{\text{L-Thrust-max}} + \frac{r.Y_p.\pi}{180.k.\Omega.R} \text{ et } \beta_{\text{R-Thrust-max}} - \frac{r.Y_p.\pi}{180.k.\Omega.R},$$

- les premier et deuxième pas maximum relatifs au couple maximum admissible sont remplacés pour chacune des deux hélices respectivement par

$$\beta_{\text{L-Torque-max}} + \frac{r.Y_p.\pi}{180.k.\Omega.R} \text{ et } \beta_{\text{R-Torque-max}} - \frac{r.Y_p.\pi}{180.k.\Omega.R},$$

- les premier et deuxième pas minimum relatifs à la poussée minimale utilisable sont remplacés pour chacune des deux hélices respectivement par

$$\beta_{\text{L-Thrust-min}} + \frac{r.Y_p.\pi}{180.k.\Omega.R} \text{ et } \beta_{\text{R-Thrust-min}} - \frac{r.Y_p.\pi}{180.k.\Omega.R},$$

et
- les premier et deuxième pas minimum relatifs au couple minimum admissible sont remplacés pour chacune des deux hélices respectivement par

$$\beta_{\text{L-Torque-min}} + \frac{r.Y_p.\pi}{180.k.\Omega.R} \text{ et } \beta_{\text{R-Torque-min}} - \frac{r.Y_p.\pi}{180.k.\Omega.R},$$

avec :

$r$ : vitesse de rotation en lacet de l'hélicoptère hybride, exprimée en degré par seconde (°/s),
$Y_p$ : bras de levier en lacet des hélices, exprimé en mètre (m),
$\pi$ : une constante trigonométrique,
$\Omega$ : vitesse de rotation des hélices, exprimée en radian par seconde (rad/s),
$R$ : rayon des hélices, exprimé en mètre (m), et
$k$ : coefficient positif inférieur ou égal à 1.

Le taux de lacet est relatif à la vitesse de rotation en lacet de l'hélicoptère hybride, à savoir la vitesse de rotation autour de l'axe de lacet de l'hélicoptère hybride. Une variation de cette vitesse de rotation en lacet de l'hélicoptère hybride a pour effet de modifier l'incidence vue par les pales des hélices et, par suite, de modifier la poussée et le couple de ces hélices. L'introduction du taux de lacet permet avantageusement de prendre en compte cette modification de la poussée et du couple des hélices et d'optimiser en conséquence la position des limites haute et basse.

Le coefficient k est relatif à la référence de pas des pales d'un rotor ou d'une hélice le long de l'envergure de la pale. Le coefficient k est par exemple égal à 0.75 lorsque le pas d'une pale est considéré au trois quart de l'envergure de la pale depuis le centre du rotor.

Outre un procédé, l'invention vise aussi un hélicoptère hybride muni d'un rotor de sustentation par exemple agencé au dessus du fuselage et d'au moins une hélice, l'hélicoptère hybride comportant un système de commande relié aux pales de ladite au moins une hélice, l'hélicoptère hybride ayant une commande de poussée configurée pour générer un ordre pour modifier un pas des pales transmis au système de commande. Le système de commande est configuré pour appliquer le procédé de l'invention précédemment décrit.

L'invention et ses avantages apparaîtront avec plus de détails dans le cadre de la description qui suit avec des exemples donnés à titre illustratif en référence aux figures annexées qui représentent :

- la figure 1, une vue schématique d'un hélicoptère hybride selon l'invention,
- la figure 2, une vue schématique d'un système de commande des hélices d'un hélicoptère hybride selon l'invention,
- la figure 3, un diagramme de commande en poussée illustrant le procédé selon l'invention, et
- la figure 4, un diagramme de commande en couple illustrant le procédé selon l'invention.

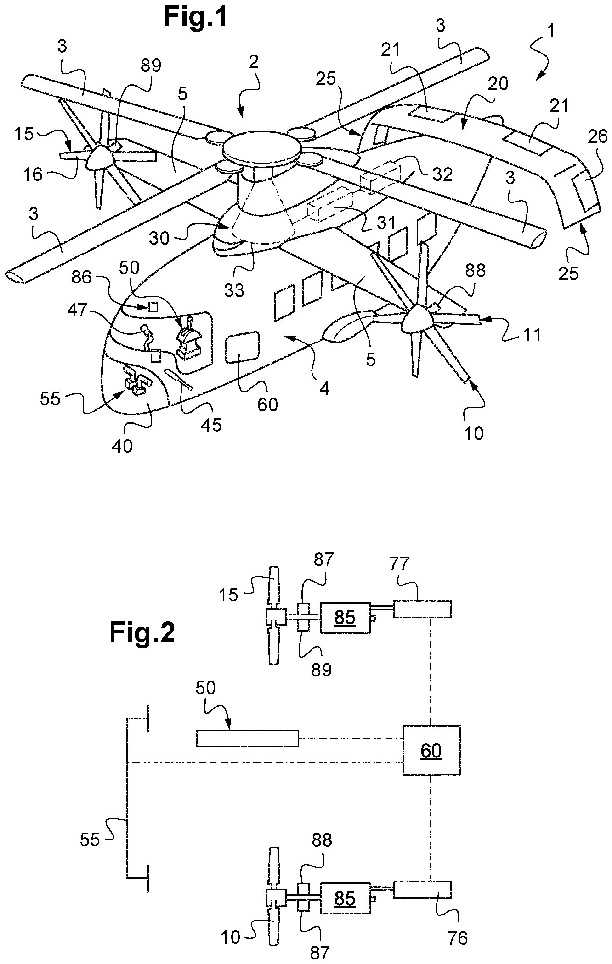

La figure 1 présente un hélicoptère hybride 1 selon l'invention. Cet hélicoptère hybride 1 comporte un fuselage 4 au dessus duquel est agencé au moins un rotor de sustentation 2. Ce rotor de sustentation 2 est muni de plusieurs pales dénommées « pales principales 3 » par commodité.

De plus, l'hélicoptère hybride 1 est pourvu d'au moins une hélice 10,15, de type tractive ou propulsive, comportant plusieurs pales 11,16. Sur la figure 1, l'hélicoptère hybride 1 comporte une première hélice 10 et une deuxième hélice 15 disposées latéralement par rapport au fuselage 4, notamment de part et d'autre d'un plan antéropostérieur de l'hélicoptère hybride 1. Les première et deuxième hélices 10, 15 peuvent être inversées. Les première et deuxième hélices 10, 15 comportent respectivement plusieurs premières pales 11 et plusieurs deuxièmes pales 16. Les première et deuxième hélices 10, 15 sont éventuellement portées par un support 5. Un tel support 5 peut être éventuellement aérodynamique. Par exemple, le support 5 comporte une aile selon l'illustration de la figure 1. Selon la figure 1, les hélices 10, 15 sont disposées au niveau du bord d'attaque d'une aile. Selon un autre exemple, les hélices 10, 15 peuvent être disposées au niveau du bord de fuite de l'aile.

Par ailleurs, l'hélicoptère hybride 1 peut comprendre des surfaces de stabilisation voire de manœuvre. Par exemple, l'hélicoptère hybride 1 peut comprendre pour la profondeur au moins un empennage sensiblement horizontal 20 éventuellement avec des gouvernes de profondeur mobiles 21. Par exemple, l'hélicoptère hybride 1 peut comprendre pour la direction au moins un empennage sensiblement vertical 25 éventuellement avec des gouvernes de dérives mobiles 26. La figure 1 illustre ainsi un ensemble arrière en forme de U inversé mais cet ensemble arrière peut avoir diverses formes sans sortir du cadre de l'invention. Selon d'autre exemple, l'ensemble arrière peut avoir une forme de H, une forme de U...

Par ailleurs, l'hélicoptère hybride 1 comporte une installation motrice 30 pour fournir une puissance au rotor de sustentation 2 et éventuellement à chaque hélice 10, 15. Cette installation motrice 30 comporte à cet effet au moins un moteur 31 contrôlé par un calculateur moteur 32 usuel.

Le terme « calculateur » désigne par la suite une unité qui peut comprendre par exemple au moins un processeur et au moins une mémoire, au moins un circuit intégré, au moins un système programmable, au moins un circuit logique, ces exemples ne limitant pas la portée donnée à l'expression « calculateur ». Le terme processeur peut désigner aussi bien une unité centrale de traitement connue sous l'acronyme CPU, une unité graphique de traitement GPU, une unité digitale connue sous l'acronyme DSP, un microcontrôleur...

En outre, l'installation motrice 30 peut comprendre, par exemple au sein d'un système d'interconnexion, au moins une boîte de transmission de puissance, au moins un arbre, et/ou au moins un organe de connexion entre deux organes en rotation... Par exemple, un ou plusieurs moteurs 31 sont reliés mécaniquement par une ou des chaînes de liaison mécaniques à une boîte de transmission principale de puissance 33 qui entraîne en rotation le rotor de sustentation 2. De plus, la boîte de transmission de puissance principale 33 peut être reliée mécaniquement par au moins un arbre à une boîte de transmission auxiliaire de puissance par hélice 10, 15 qui est donc à son tour reliée à une hélice 10, 15.

Les moteurs 31, la boîte de transmission principale de puissance 33, chaque boîte de transmission auxiliaire de puissance ainsi que les arbres de liaison entre ces éléments et chaque arbre de transmission entraînant en rotation des pales 11,16 des hélices 10,15 forment une chaîne de transmission mécanique de l'hélicoptère hybride 1 entraînant en rotation des pales 11,16 des hélices 10,15.

Les vitesses de rotation des sorties du ou des moteurs 31, des hélices 10, 15, du rotor de sustentation 2 et du système mécanique d'interconnexion sont éventuellement proportionnelles entre elles, le rapport de proportionnalité étant éventuellement constant quelle que soit la configuration de vol de l'hélicoptère hybride 1 en conditions normales de fonctionnement, à savoir hors cas de panne ou d'essais ou de formation.

Par ailleurs, l'hélicoptère hybride 1 peut comprendre diverses commandes pour être piloté.

En particulier, l'hélicoptère hybride 1 peut comprendre un système de commande 40 relié à des commandes de vol 45,47 pour piloter collectivement et cycliquement le pas des pales principales 3. Un tel système de commande 40 peut par exemple inclure un ensemble de plateaux cycliques. Ainsi, à chaque instant, le pas des pales principales 3 peut être égal à la somme d'un pas collectif identique pour toutes les pales principales 3 et d'un pas cyclique qui varie en fonction de l'azimut de chaque pale principale 3.

De manière usuelle, l'hélicoptère hybride 1 peut comprendre des commandes reliées au système de commande 40 pour piloter le pas des premières pales 11 de la première hélice 10 et des deuxièmes pales 16 de la deuxième hélice 15. A chaque instant, le premier pas des premières pales 11 de la première hélice 10 peut être égal à la somme d'une composante de pas moyen et d'une composante de pas différentiel alors que le deuxième pas des deuxièmes pales 16 de la deuxième hélice 15 est égal à la différence entre cette composante de pas moyen et la composante de pas différentiel.

Eventuellement, l'hélicoptère hybride 1 comporte un premier senseur 88 de mesure pour mesurer la première valeur du premier pas des premières pales 11 et un deuxième senseur 89 de mesure pour mesurer la deuxième valeur du deuxième pas des deuxièmes pales 16. Par exemple, le premier senseur 88 de mesure comporte un capteur de position émettant un signal analogique ou numérique, électrique ou optique qui varie en fonction de la position d'un arbre de commande du premier pas des premières pales 11. De même, le deuxième senseur 89 peut comporter un capteur de position émettant un signal analogique ou numérique, électrique ou optique qui varie en fonction de la position d'un arbre de commande du deuxième pas des deuxièmes pales 16. Chaque capteur de position peut être d'un type usuel et peut par exemple comprendre un capteur de vitesse permettant d'obtenir une position par intégration, un potentiomètre...

L'hélicoptère hybride 1 peut aussi comporter au moins un capteur de couple 87 permettant de mesurer un couple exercé dans la chaîne de transmission mécanique entraînant en rotation les pales 11,16 de chaque hélice 10,15. Un tel capteur de couple 87 peut être positionné en tout point de la chaîne de transmission mécanique et est suffisant afin de déterminer le couple en tout point de cette chaîne de transmission. Deux capteurs de couple 87 sont par exemple positionnés respectivement sur les arbres de transmission des deux hélices 10,15.

De plus, l'hélicoptère hybride 1 peut comprendre un dispositif de mesure 86 de la vitesse d'avancement courante par rapport à l'air de l'hélicoptère hybride 1. Ce dispositif de mesure 89 comporte par exemple un anémomètre, un dispositif muni d'un tube de Pitot ou tout autre dispositif adapté. La vitesse d'avancement peut être la vitesse air vrai identifiée par l'acronyme *TAS* pour la désignation en langue anglaise « True Air Speed » ou bien la vitesse air indiquée identifiée par l'acronyme *IAS* pour la désignation en langue anglaise « Indicated Air Speed ».

De manière usuelle, l'hélicoptère hybride 1 peut comprendre une commande de poussée 50 manœuvrable par un pilote qui agit sur une ou plusieurs chaînes de commande mécaniques et/ou électriques du système de commande 40 pour faire varier la composante de pas moyen du pas des premières pales 11 et du pas des deuxièmes pales 16. La figure 1 illustre une commande de poussée 50 de type levier mais peut aussi par exemple prendre la forme d'un bouton générant un signal numérique ou d'une molette générant un signal analogique par exemple.

De même, l'hélicoptère hybride 1 peut comprendre une commande de contrôle en lacet 55 manœuvrable par un pilote qui agit sur une ou plusieurs chaînes de commande mécaniques et/ou électriques du système de commande 40 pour faire varier la composante de pas différentiel du pas des premières pales 11 et du pas des deuxièmes pales 16. La commande de contrôle en lacet 55 peut prendre la forme d'un palonnier par exemple.

En outre, le système de commande 40 peut comporter un calculateur de pilotage 60 en communication au moins avec la commande de poussée 50 pour appliquer le procédé de l'invention ainsi qu'éventuellement avec la commande de contrôle en lacet 55, le premier senseur 88 de mesure et/ou le deuxième senseur 89 de mesure.

La figure 2 présente un exemple de système de commande 40 pour piloter les hélices 10, 15.

Selon cet exemple, la commande de contrôle en lacet 55 et la commande de poussée 50 communiquent avec le calculateur de pilotage 60. Ce calculateur de pilotage 60 est en communication avec des actionneurs 76, 77 reliés respectivement aux distributeurs hydrauliques 85.

Le calculateur de pilotage 60 applique alors une ou plusieurs lois mémorisées pour commander les actionneurs 76, 77 en fonction des signaux émis directement ou indirectement par la commande de poussée 50 et éventuellement la commande de contrôle en lacet 55.

Le système de commande 40 de la figure 2 est donné à titre d'illustration.

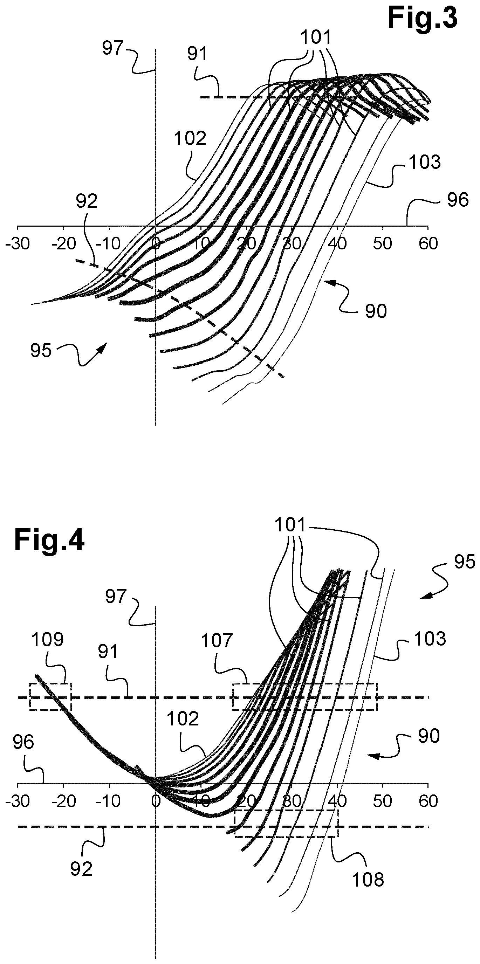

Selon un autre aspect, les figures 3 et 4 illustrent des diagrammes de commande 95 relatifs respectivement à deux caractéristiques différentes d'une hélice 10,15 et présentant le pas des pales 11,16 de cette hélice 10,15 en abscisse 96 et ladite caractéristique de l'hélice 10,15 en ordonnée 97. Chaque diagramme de commande 95 comporte un ensemble de courbes 101,102,103 de variation de cette caractéristique en fonction du pas des pales 11,16 de l'hélice 10,15. Chaque courbe 101,102,103 est définie pour une vitesse d'avancement de l'hélicoptère hybride 1. Pour ces deux figures 3 et 4, la courbe 102 la plus à gauche correspond à une vitesse d'avancement sensiblement nulle et la courbe 103 la plus à droite correspond à une vitesse d'avancement maximale de l'hélicoptère hybride 1.

Chaque diagramme de commande 95 comporte une limite haute 91 et une limite basse 92 délimitant un domaine de commande 90.

La figure 3 représente un diagramme de commande 95 relatif à la poussée générée par l'hélice 10,15. Les limites haute 91 et basse 92 sont associées à des limites aérodynamiques de l'hélice 10,15, en particulier à un décrochage aérodynamique des pales 11,16 de l'hélice 10,15. La limite haute 91 et la limite basse 92 sont donc définies par les valeurs de pas auxquelles apparaît le décrochage en fonction de la vitesse d'avancement de l'hélicoptère hybride 1 éventuellement en prenant en compte une marge.

En outre, la poussée prise en compte dans le diagramme de commande 90 peut être la poussée, générée par une hélice 10,15 en tant que telle ou bien une poussée réduite pouvant être indépendante des conditions atmosphériques et notamment de la température et de la pression atmosphérique courante à l'extérieur de l'hélicoptère hybride 1.

La figure 4 représente un diagramme de commande 95 relatif à un couple exercé dans la chaîne de transmission mécanique de l'hélicoptère hybride 1. Les limites haute 91 et basse 92 sont associées à des limites mécaniques relatives à la chaîne de transmission mécanique entraînant les pales 11,16 de chaque hélice 10,15.

La limite haute 91 correspond au cas où l'hélice 10,15 est motrice et participe donc à l'avancement de l'hélicoptère hybride 1. Cette limite haute 91 peut être atteinte lorsque l'hélice 10,15 génère une poussée vers l'avant de l'hélicoptère hybride 1, le pas des pales 11,16 étant alors positif et situé dans la zone 107 selon la figure 4. Cette limite haute 91 peut aussi être atteinte lorsque l'hélice 10,15 génère une poussée vers l'arrière de l'hélicoptère hybride 1, le pas des pales 11,16 étant alors négatif et situé dans la zone 109 selon la figure 4. Ce cas particulier se produit en fait en vol stationnaire ou à très faible vitesse d'avancement, la fonction de contrôle en lacet des hélices 10,15 étant prépondérante par rapport à la fonction avancement afin de s'opposer au couple généré par le rotor de sustentation 2 sur le fuselage 4.

La limite basse 92 correspond au cas où l'hélice 10,15 est génératrice d'une puissance mécanique et ne participe donc pas à l'avancement de l'hélicoptère hybride 1. Cette limite basse 92 peut être atteinte de façon transitoire suite à une baisse rapide du pas des pales 11,16 des hélices 10,15 en vol de croisière à haute vitesse d'avancement ou bien dans le cas d'un vol en piqué. Le flux d'air balayant l'hélicoptère hybride 1 entraîne dans ces deux cas la rotation des pales 11,16 des hélices 10,15.Le pas des pales 11,16 reste positif et est situé dans la zone 108 selon la figure 4.

Selon le procédé de l'invention, à chaque itération, le système de commande 40 maintient le pas des pales 11,16 de chaque hélice 10,15 dans le domaine de commande 90 respectif pour une caractéristique de l'hélice 10,15, à savoir la poussée générée par l'hélice 10,15 et/ou le couple exercé dans la chaîne de transmission mécanique. De la sorte, à chaque itération, le système de commande 40 borne le pas des pales 11,16 en les maintenant dans le ou les domaines de commande 90 autorisés afin de protéger automatiquement la chaîne de transmission mécanique entraînant les pales 11,16 des hélices 10,15 et/ou la progression de l'hélicoptère hybride.

Chaque domaine de commande 90 est borné par une limite haute 91 et une limite basse 92 spécifiques de la caractéristique associée. L'étape de maintien précédemment évoqué permet, à chaque itération et en fonction de la vitesse d'avancement, d'une part de maintenir le pas des pales 11,16 de l'hélice 10,15 en dessous de la limite haute 91 et d'autre part de maintenir le pas des pales 11,16 de l'hélice 10,15 au dessus de la limite basse 92.

De la sorte, lorsque le pas des pales 11,16 d'une hélice 10,15 atteint la limite haute 91, le système de commande 40 provoque par exemple, lorsque la vitesse d'avancement diminue, une baisse du pas des pales 11,16 de cette hélice 10,15 en valeur absolue, ou bien interdit, lorsque la vitesse d'avancement n'augmente pas, une augmentation du pas des pales 11,16 de cette hélice 10,15 en valeur absolue.

L'utilisation de la valeur absolue permet, lorsque la caractéristique de l'hélice 10,15 est le couple exercé dans la chaîne de transmission mécanique, de prendre en compte les cas de pas positif et de pas négatif.

De même, lorsque le pas des pales 11,16 d'une hélice 10,15 atteint la limite basse 92, le système de commande 40 provoque par exemple, lorsque la vitesse d'avancement augmente, une augmentation du pas des pales 11,16 de cette hélice 10,15 ou bien interdit, lorsque la vitesse d'avancement ne diminue pas, une baisse du pas des pales 11,16 de cette hélice 10,15.

La position du point de fonctionnement courant de l'hélicoptère hybride 1 sur le diagramme de commande 90 peut être déterminée par l'intermédiaire du pas des pales 11,16 de l'hélice 10,15, obtenu grâce à un senseur 88,89, et de la vitesse d'avancement courante de l'hélicoptère hybride 1, obtenue grâce au dispositif de mesure 86.

Lorsque la caractéristique de l'hélice 10,15 est le couple exercé dans la chaîne de transmission mécanique, la position de ce point de fonctionnement courant sur le diagramme de commande 90 peut être déterminé par l'intermédiaire du couple exercé dans la chaîne de transmission mécanique, obtenu grâce à un capteur de couple 87, et de la vitesse d'avancement courante de l'hélicoptère hybride 1, obtenue grâce au dispositif de mesure 86.

En conséquence, suite à une action d'un pilote de l'hélicoptère hybride 1 sur la commande de poussée 50, le calculateur de pilotage 60 reçoit un signal de commande de poussée directement ou indirectement de la commande de poussée 50 et peut alors commander les actionneurs 76, 77 en fonction au moins d'une loi mémorisée permettant de borner les ordres émis via le signal de commande de poussée afin de maintenir le pas des pales 11,16 de chaque hélice 10,15 dans le domaine de commande 90.

En outre, durant l'étape de maintien du pas dans le domaine de commande 90 le calculateur de pilotage 60 permet de calculer un pas maximum et un pas minimum correspondant respectivement à la limite haute 91 et la limite basse 92 du domaine de commande 90 pour chaque hélice et pour chaque caractéristique de l'hélice 10,15. Le pas maximum est par exemple défini sur le diagramme de commande 90 par l'intersection de la limite haute 92 avec une courbe 102 correspondant à la vitesse d'avancement courante de l'hélicoptère hybride 1 et le pas minimum est défini par l'intersection de la limite basse 91 avec cette même courbe.

Lorsque la caractéristique de l'hélice 10,15 est le couple exercé dans la chaîne de transmission mécanique, durant l'étape de maintien du pas dans le domaine de commande 90, le calculateur de pilotage 60 permet, à chaque itération et pour la vitesse d'avancement courante de l'hélicoptère hybride 1, de calculer un pas maximum $\beta_{Torque\text{-}max}$ et un pas minimum $\beta_{Torque\text{-}min}$ des pales 11,16 de l'hélice 10,15 relatif respectivement à un couple maximum ou minimal admissible par la chaîne de transmission mécanique. Ce couple minimal admissible est en fait un couple négatif.

De même, lorsque la caractéristique de l'hélice 10,15 est la poussée de cette hélice 10,15, durant l'étape de maintien du pas dans le domaine de commande 90, le calculateur de pilotage 60 permet, à chaque itération et pour la vitesse d'avancement courante de l'hélicoptère hybride 1, de calculer un pas maximum $\beta_{Thrust\text{-}max}$ et d'un pas minimum $\beta_{Thrust\text{-}min}$ des pales 11,16 de l'hélice 10,15 relatif respectivement à une poussée maximale ou minimale utilisable.

Les pas maximum $\beta_{Thrust\text{-}max}$ et $\beta_{Torque\text{-}max}$ des pales 11,16 peuvent être différents pour les deux hélices par exemple lorsque les géométries des pales 11,16 des deux hélices 10,15 sont différentes. Il en va de même pour les

pas minimum $\beta_{Thrust-min}$ et $\beta_{Torque-min}$. On identifiera alors « $\beta_{L-Thrust-max}$ » et « $\beta_{L-Torque-max}$ » les pas maximum des pales 11 de la première hélice 10 et « $\beta_{R-Thrust-max}$ » et« $\beta_{R-Torque-max}$ » les pas maximum des pales 16 de la deuxième hélice 15 relatifs respectivement à la poussée utilisable et au couple admissible par la chaîne de transmission mécanique.

Le calculateur de pilotage 60 peut alors commander les actionneurs 76, 77 en fonction au moins d'une loi mémorisée et des pas maximum et minimum relatifs respectivement à des caractéristiques maximales et minimales, après que le calculateur de pilotage 60 ait reçu un signal de commande de poussée suite à une action d'un pilote sur cette commande de poussée 50. Cette au moins une loi permet de borner les ordres émis via le signal de commande de poussée afin de maintenir le pas des pales 11,16 de chaque hélice 10,15 dans le domaine de commande 90.

Le procédé de protection en couple et en poussée d'au moins une hélice 10,15 d'un hélicoptère hybride 1 selon l'invention peut ainsi permettre de protéger chaque hélice 10,15 de façon indépendante pour chaque caractéristique de l'hélice 10,15, à savoir sa poussée et le couple exercé dans sa chaîne de transmission mécanique. Le procédé selon l'invention peut ainsi permettre de protéger chaque hélice 10,15 indépendamment les unes des autres lorsque l'hélicoptère hybride 1 comporte au moins deux hélices 10,15.

Cependant, il peut être intéressant de combiner les pas maximum d'une hélice 10,15 relatifs aux deux caractéristiques de cette hélice 10,15, à savoir sa poussée et le couple exercé dans sa chaîne de transmission mécanique afin de prendre en compte simultanément les limites liées à ces deux caractéristiques.

De même, il peut être intéressant de combiner les pas maximum de toutes les hélices 10,15 de l'hélicoptère hybride 1, lorsque l'hélicoptère hybride comporte au moins deux hélices 10,15, afin de prendre en compte simultanément pour chaque hélice 10,15 les limites liées à toutes les hélices 10,15.

Dans ce but, le procédé selon l'invention peut permettre, pour la vitesse d'avancement courante de l'hélicoptère hybride, d'une part de calculer un pas moyen global maximum $\beta_{TCC-Complete-max}$ relatif simultanément à la poussée maximale utilisable et au couple maximum admissible pour chaque hélice 10,15 et de calculer un pas moyen global minimum $\beta_{TCC-Complete-min}$ relatif simultanément à la poussée minimale utilisable et au couple minimum admissible pour chaque hélice, pour la vitesse d'avancement courante de l'hélicoptère hybride.

Le pas moyen global minimum $\beta_{TCC-Complete-min}$ d'une hélice 10,15 peut être défini en fonction du pas minimum $\beta_{Thrust-min}$ et du pas minimum $\beta_{Torque-min}$ de cette hélice 10,15, et éventuellement des pas minimum de chaque autre hélice 10,15 de l'hélicoptère hybride 1.

De même, le pas moyen global maximum $\beta_{TCC-Complete-max}$ peut être défini en fonction du pas maximum $\beta_{Thrust-max}$ et du pas maximum $\beta_{Torque-max}$ de cette hélice 10,15, et éventuellement des pas maximum de chaque autre hélice 10,15 de l'hélicoptère hybride 1.

Le calculateur de pilotage 60 peut alors commander les actionneurs 76, 77 en fonction au moins d'une loi mémorisée, du pas moyen global minimum $\beta_{TCC-Complete-min}$, et du pas moyen global maximum $\beta_{TCC-Complete-max}$ après que le calculateur de pilotage 60 ait reçu un signal de commande de poussée. Cette au moins une loi permet de borner les ordres émis via le signal de commande de poussée afin de maintenir le pas des pales 11,16 de chaque hélice dans 10,15 le domaine de commande 90.

Dans le cas d'un hélicoptère hybride 1 comportant deux hélices 10,15 conformément à la figure 1, l'étape de calcul d'un pas moyen global maximum $\beta_{TCC-Complete-max}$ peut comporter les sous-étapes suivantes :

- mesure d'un premier pas courant $\beta_L$ des premières pales 11 et d'un deuxième pas courant $\beta_R$ des deuxièmes pales 16,

- calcul d'un premier pas de calcul maximum relatif à la poussée maximale utilisable pour la première hélice 10 de sorte que,

$$\beta_{TCC-L-Thrust-max} = \frac{\beta_{L-Thrust-max} + \beta_R}{2},$$

- calcul d'un deuxième pas de calcul maximum relatif à la poussée maximale utilisable pour la deuxième hélice 15 de sorte que,

$$\beta_{TCC-R-Thrust-max} = \frac{\beta_L + \beta_{R-Thrust-max}}{2},$$

- calcul d'un pas moyen de calcul maximum relatif à la poussée maximale utilisable pour les deux hélices 10,15 de sorte que,

$$\beta_{\text{TCC}-\text{Thrust}-\text{max}-\text{NODIFF}} = \frac{\beta_{\text{TCC}-\text{L}-\text{Thrust}-\text{max}} + \beta_{\text{TCC}-\text{R}-\text{Thrust}-\text{max}}}{2},$$

- calcul d'un pas moyen maximum relatif à la poussée maximale utilisable pour les deux hélices 10,15 de sorte que,

$$\beta_{\text{TCC}-\text{Thrust}-\text{max}} = \beta_{\text{TCC}-\text{Thrust}-\text{max}-\text{NODIFF}} - ABS(\beta_{\text{TCC}-\text{L}-\text{Thrust}-\text{max}} - \beta_{\text{TCC}-\text{R}-\text{Thrust}-\text{max}}),$$

- calcul d'un pas de calcul maximum relatif au couple maximum admissible pour la première hélice 10 de sorte que,

$$\beta_{\text{TCC}-\text{L}-\text{Torque}-\text{max}} = \frac{\beta_{\text{L}-\text{Torque}-\text{max}} + \beta_R}{2},$$

- calcul d'un deuxième pas de calcul maximum relatif au couple maximum admissible pour la deuxième hélice 15 de sorte que,

$$\beta_{\text{TCC}-\text{R}-\text{Torque}-\text{max}} = \frac{\beta_L + \beta_{\text{R}-\text{Torque}-\text{max}}}{2},$$

- calcul d'un pas moyen de calcul maximum relatif au couple maximum admissible pour les deux hélices 10,15 de sorte que,

$$\beta_{\text{TCC}-\text{Torque}-\text{max}-\text{NODIFF}} = \frac{\beta_{\text{TCC}-\text{L}-\text{Torque}-\text{max}} + \beta_{\text{TCC}-\text{R}-\text{Torque}-\text{max}}}{2},$$

- calcul d'un pas moyen maximum relatif au couple maximum admissible pour les deux hélices 10,15 de sorte que,

$$\beta_{\text{TCC}-\text{Torque}-\text{max}} = \beta_{\text{TCC}-\text{Torque}-\text{max}-\text{NODIFF}} - ABS(\beta_{\text{TCC}-\text{L}-\text{Torque}-\text{max}} - \beta_{\text{TCC}-\text{R}-\text{Torque}-\text{max}}),$$

- calcul du pas moyen global maximum relatif à la poussée maximale utilisable et au couple maximum admissible pour les deux hélices 10,15 de sorte que,

$$\beta_{\text{TCC}-\text{Complete}-\text{max}} = MIN(\beta_{\text{TCC}-\text{Thrust}-\text{max}}; \beta_{\text{TCC}-\text{Torque}-\text{max}}).$$

En outre, lors d'une étape de correction, pour chacune des deux hélices 10,15, les pas maximum $\beta_{\text{L-Thrust-max}}$, $\beta_{\text{R-Thrust-max}}$, $\beta_{\text{L-Torque-max}}$ et $\beta_{\text{R-Torque-max}}$ peuvent être corrigés selon un taux de lacet de l'hélicoptère hybride 1 et remplacés respectivement par $\beta_{\text{L}-\text{Thrust}-\text{max}} + \frac{r.Y_p.\pi}{180.k.\Omega R}$, $\beta_{\text{R}-\text{Thrust}-\text{max}} - \frac{r.Y_p.\pi}{180.k.\Omega R}$, $\beta_{\text{L}-\text{Torque}-\text{max}} + \frac{r.Y_p.\pi}{180.k.\Omega R}$ et $\beta_{\text{R}-\text{Torque}-\text{max}} - \frac{r.Y_p.\pi}{180.k.\Omega R}$, avec: r: vitesse de rotation en lacet de l'hélicoptère hybride 1, exprimée en degré par seconde (°/s),

Yp : bras de levier en lacet des hélices 10,15, exprimé en mètre (m),
$\pi$ : une constante trigonométrique,
$\Omega$ : vitesse de rotation des hélices 10,15, exprimée en radian par seconde (rad/s),
R : rayon des hélices 10,15, exprimé en mètre (m), et

$k$ : coefficient positif inférieur ou égal à 1.

L'étape de calcul d'un pas moyen global minimum $\beta_{TCC-Complete-min}$ peut aussi comporter les sous-étapes suivantes :

- mesure d'un premier pas courant $\beta_L$ des premières pales 11 et d'un deuxième pas courant $\beta_R$ des deuxièmes pales 16,

- calcul d'un premier pas de calcul minimum relatif à la poussée minimale utilisable pour la première hélice 10 de sorte que,

$$\beta_{\text{TCC}-\text{L}-\text{Thrust}-\text{min}} = \frac{\beta_{\text{L}-\text{Thrust}-\text{min}} + \beta_R}{2},$$

- calcul d'un deuxième pas de calcul minimum relatif à la poussée minimale utilisable pour la deuxième hélice 15 de sorte que,

$$\beta_{\text{TCC}-\text{R}-\text{Thrust}-\text{min}} = \frac{\beta_L + \beta_{\text{R}-\text{Thrust}-\text{min}}}{2},$$

- calcul d'un pas moyen de calcul minimum relatif à la poussée minimale utilisable pour les deux hélices 10,15 de sorte que,

$$\beta_{\text{TCC}-\text{Thrust}-\text{min}-\text{NODIFF}} = \frac{\beta_{\text{TCC}-\text{L}-\text{Thrust}-\text{min}} + \beta_{\text{TCC}-\text{R}-\text{Thrust}-\text{min}}}{2},$$

- calcul d'un pas moyen minimum relatif à la poussée minimale utilisable pour les deux hélices 10,15 de sorte que,

$$\beta_{\text{TCC}-\text{Thrust}-\text{min}} = \beta_{\text{TCC}-\text{Thrust}-\text{min}-\text{NODIFF}} + ABS(\beta_{\text{TCC}-\text{L}-\text{Thrust}-\text{min}} - \beta_{\text{TCC}-\text{R}-\text{Thrust}-\text{min}}),$$

- calcul d'un premier pas de calcul minimum relatif au couple minimum admissible pour la première hélice 10 de sorte que,

$$\beta_{\text{TCC}-\text{L}-\text{Torque}-\text{min}} = \frac{\beta_{\text{L}-\text{Torque}-\text{min}} + \beta_R}{2},$$

- calcul d'un deuxième pas de calcul minimum relatif au couple minimum admissible pour la deuxième hélice 15 de sorte que,

$$\beta_{\text{TCC}-\text{R}-\text{Torque}-\text{min}} = \frac{\beta_L + \beta_{\text{R}-\text{Torque}-\text{min}}}{2},$$

- calcul d'un pas moyen de calcul minimum relatif au couple minimum admissible pour les deux hélices 10,15 de sorte que,

$$\beta_{\text{TCC}-\text{Torque}-\text{min}-\text{NODIFF}} = \frac{\beta_{\text{TCC}-\text{L}-\text{Torque}-\text{min}} + \beta_{\text{TCC}-\text{R}-\text{Torque}-\text{min}}}{2},$$

- calcul d'un pas moyen minimum relatif au couple minimum admissible pour les deux hélices 10,15 de sorte que,

$$\beta_{\text{TCC-Torque-min}} = \beta_{\text{TCC-Torque-min-NODIFF}} + ABS\big(\beta_{\text{TCC-L-Torque-min}} -$$

$$\beta_{\text{TCC-R-Torque-min}}\big),$$

- calcul du pas moyen global minimum relatif à la poussée minimale utilisable et au couple minimum admissible pour les deux hélices 10,15 de sorte que,

$$\beta_{\text{TCC-Complete-min}} = MAX\big(\beta_{\text{TCC-Thrust-min}}; \beta_{\text{TCC-Torque-min}}\big).$$

Comme précédemment, lors de l'étape de correction, pour chacune des deux hélices 10,15, les pas minimum $\beta_{\text{L-Thrust-min}}$, $\beta_{\text{R-Thrust-min}}$, PL-Torque-min et $\beta_{\text{R-Torque-min}}$ peuvent être corrigés selon le taux de lacet de l'hélicoptère hybride 1 et remplacés respectivement par $\beta_{\text{L-Thrust-min}} + \dfrac{r.Y_p.\pi}{180.k.\Omega R}$, $\beta_{\text{R-Thrust-min}} - \dfrac{r.Y_p.\pi}{180.k.\Omega R}$, $\beta_{\text{L-Torque-min}} + \dfrac{r.Y_p.\pi}{180.k.\Omega R}$ et $\beta_{\text{R-Torque-min}} - \dfrac{r.Y_p.\pi}{180.k.\Omega R}$.

De plus, lorsque le système de commande 40 reçoit un signal de commande en lacet directement ou indirectement de la commande de contrôle en lacet 55 suite à une action d'un pilote alors que le pas des pales 11,16 d'au moins une hélice 10,15 atteint une des limites 91,92 du domaine de commande 90, le système de commande 40 peut alors commander les actionneurs 76, 77 en fonction au moins d'une loi mémorisée après que le calculateur de pilotage 60 ait reçu le signal de commande en lacet. Cette au moins une loi permet alors avantageusement de modifier la composante de pas moyen du pas des pales 11,16 des hélices 10,15 de sorte à permettre d'appliquer la composante de pas différentiel aux pas des pales 11,16 des deux hélices 10,15 sans sortir du domaine de commande 40.

En effet, la composante de pas moyen des pas des pales 11,16 des hélices 10,15 est modifiée d'une valeur sensiblement égale à la valeur absolue de la modification de la composante de pas différentiel correspondant au signal de commande en lacet. En conséquence, le pas des pales 11,16 de l'hélice 10,15 ayant atteint une des limites 91,92 s'éloigne suffisamment de cette limite 91,92 pour permettre la réalisation de commande en lacet demandée par le pilote sans sortir du domaine de commande 90.

Le procédé selon l'invention ne limite ainsi pas les actions du pilote sur la commande de contrôle en lacet 55 agissant sur le pas différentiel. Les manœuvres consécutives à une action sur la commande de contrôle en lacet 55 tel qu'un changement de direction par exemple, peuvent être réalisées tout en maintenant avantageusement la protection octroyée par le procédé selon l'invention.

Par ailleurs, lorsque l'hélicoptère hybride 1 comporte une seule hélice 10 ou plusieurs hélices 10,15, le pas moyen global maximum $\beta_{\text{TCC-Complete-max}}$ peut aussi être déterminé de sorte à être égal à la valeur minimale du pas maximum $\beta_{\text{Thrust-max}}$ et du pas maximum $\beta_{\text{Torque-max}}$ de chaque hélice 10,15 alors que le pas moyen global minimum $\beta_{\text{TCC-Complete-min}}$ peut être déterminé de sorte à être égal à la valeur maximale parmi le pas minimum $\beta_{\text{Thrust-min}}$ relatif à la poussée minimale utilisable et le pas minimum $\beta_{\text{Torque-min}}$ relatif au couple minimal admissible de chaque hélice 10,15.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, qui est défini par les revendications affichées.

## Revendications

1. Procédé de protection en couple et/ou en poussée d'au moins une hélice (10,15) d'un hélicoptère hybride (1), ledit hélicoptère hybride (1) comportant un rotor de sustentation (2) et au moins une hélice (10,15), ledit hélicoptère hybride (1) comprenant un système de commande (40) relié à des pales (11,16) de ladite au moins une hélice (10,15), ledit hélicoptère hybride (1) ayant une commande de poussée (50) configurée pour générer un ordre pour modifier un pas desdites pales (11,16) transmis au système de commande (40), lesdites pales (11,16) de ladite au moins une hélice (10,15) étant entraînées en rotation par une chaîne de transmission mécanique dudit hélicoptère hybride (1),

   ledit procédé comportant l'étape suivante :

   - maintien par le système de commande (40) dudit pas desdites pales (11,16) de ladite au moins une hélice (10,15) dans au moins un domaine de commande (90) relatif à une caractéristique de ladite au moins une hélice (10,15) et défini par des limites de ladite caractéristique, ladite caractéristique étant une poussée générée par ladite au moins une hélice (10,15) ou un couple exercé dans ladite chaîne de transmission mécanique,

**caractérisé en ce que** ledit au moins un domaine de commande (90) est borné par une limite haute (91) et une limite basse (92) de ladite caractéristique dans un diagramme de commande (95) présentant le pas desdites pales (11,16) d'une hélice (10,15) en abscisse et ladite caractéristique de ladite hélice (10,15) en ordonnée, ledit diagramme de commande (95) comportant un ensemble de courbes pour différentes vitesses d'avancement dudit hélicoptère hybride (1), et ladite étape de maintien par le système de commande (40) dudit pas dans ledit domaine de commande (90) comporte les étapes suivantes à chaque itération :

- maintien dudit pas desdites pales (11,16) en dessous de ladite limite haute (91) en fonction de ladite vitesse d'avancement dudit hélicoptère hybride (1), et
- maintien dudit pas desdites pales (11,16) au dessus de ladite limite basse (92) en fonction de ladite vitesse d'avancement dudit hélicoptère hybride (1).

2. Procédé selon la revendication 1,
**caractérisé en ce que** ledit maintien dudit pas en dessous de ladite limite haute (91) comporte, lorsque ledit pas desdites pales (11,16) atteint ladite limite haute (91), l'étape suivante à chaque itération :

- baisse dudit pas en valeur absolue lorsque ladite vitesse d'avancement dudit hélicoptère hybride (1) diminue par rapport à ladite vitesse d'avancement atteinte lorsque ledit pas desdites pales (11,16) atteint ladite limite haute (91).

3. Procédé selon l'une quelconque des revendications 1 à 2, **caractérisé en ce que** ledit maintien dudit pas en dessous de ladite limite haute (91) comporte, lorsque ledit pas desdites pales (11,16) atteint ladite limite haute (91), l'étape suivante à chaque itération :

- interdiction d'une augmentation dudit pas en valeur absolue lorsque ladite vitesse d'avancement dudit hélicoptère hybride (1) n'augmente pas au dessus de ladite vitesse d'avancement atteinte lorsque ledit pas desdites pales (11,16) atteint ladite limite haute (91).

4. Procédé selon l'une quelconque des revendications 1 à 3, **caractérisé en ce que** ledit maintien dudit pas au dessus de ladite limite basse (92) comporte, lorsque ledit pas desdites pales (11,16) atteint ladite limite basse (92), l'étape suivante à chaque itération :

- augmentation dudit pas lorsque ladite vitesse d'avancement dudit hélicoptère hybride (1) augmente par rapport ladite vitesse d'avancement atteinte lorsque ledit pas desdites pales (11,16) atteint ladite limite basse (92).

5. Procédé selon l'une quelconque des revendications 1 à 4, **caractérisé en ce que** ledit maintien dudit pas au dessus de ladite limite basse (92) comporte, lorsque ledit pas desdites pales (11,16) d'une hélice (10,15) atteint ladite limite basse (92), l'étape suivante à chaque itération :

- interdiction d'une baisse dudit pas lorsque ladite vitesse d'avancement dudit hélicoptère hybride (1) ne diminue pas en dessous de ladite vitesse d'avancement atteinte lorsque ledit pas desdites pales (11,16) atteint ladite limite basse (92).

6. Procédé selon l'une quelconque des revendications 1 à 5, **caractérisé en ce que** ladite étape de maintien par le système de commande (40) dudit pas dans ledit domaine de commande (90) comporte, lorsque ladite caractéristique est ledit couple exercé dans ladite chaîne de transmission mécanique, les étapes suivantes à chaque itération :

- calcul d'un pas maximum ($\beta_{Torque-max}$) desdites pales (11,16) relatif à un couple maximum admissible pour une vitesse d'avancement courante dudit hélicoptère hybride (1), et
- calcul d'un pas minimum ($\beta_{Torque-min}$) desdites pales (11,16) relatif à un couple minimal admissible pour ladite vitesse d'avancement courante dudit hélicoptère hybride (1).

7. Procédé selon la revendication 6,
**caractérisé en ce que** ledit système de commande (40) comportant un calculateur de pilotage (60) recevant au moins un signal de commande de poussée émis par la commande de poussée (50), ledit calculateur de pilotage (60) pilotant au moins un actionneur (76, 77) du système de commande (40), le maintien dudit pas dans le domaine de commande (90) comporte une étape de commande dudit actionneur (76, 77) par le calculateur de pilotage (60) en fonction au moins d'une loi mémorisée ainsi qu'au moins dudit signal de commande de poussée, dudit pas maximum ($\beta_{\text{Torque-max}}$) et dudit pas minimum ($\beta_{\text{Torque-min}}$).

8. Procédé selon l'une quelconque des revendications 1 à 7, **caractérisé en ce que** ladite étape de maintien par le système de commande (40) dudit pas dans ledit domaine de commande (90) comporte, lorsque ladite caractéristique est ladite poussée, les étapes suivantes à chaque itération :

- calcul d'un pas maximum ($\beta_{\text{Thrust-max}}$) desdites pales (11,16) relatif à une poussée maximale utilisable pour une vitesse d'avancement courante dudit hélicoptère hybride (1), et
- calcul d'un pas minimum ($\beta_{\text{Thrust-min}}$) desdites pales (11,16) relatif à une poussée minimale utilisable pour ladite vitesse d'avancement courante dudit hélicoptère hybride (1).

9. Procédé selon la revendication 8,
**caractérisé en ce que** ledit système de commande (40) comportant un calculateur de pilotage (60) recevant au moins un signal de commande de poussée émis par la commande de poussée (50), ledit calculateur de pilotage (60) pilotant au moins un actionneur (76, 77) du système de commande (40), le maintien dudit pas dans le domaine de commande (90) comporte une étape de commande dudit actionneur (76, 77) par le calculateur de pilotage (60) en fonction au moins d'une loi mémorisée ainsi qu'au moins dudit signal de commande de poussée, dudit pas maximum ($\beta_{\text{Thrust-max}}$) et dudit pas minimum ($\beta_{\text{Thrust-min}}$).

10. Procédé selon les revendications 6 et 8,
**caractérisé en ce que** ledit hélicoptère hybride (1) comportant une seule hélice (10), ledit procédé de protection en couple et en poussée d'au moins une hélice (10,15) d'un hélicoptère hybride (1) comporte les étapes suivantes à chaque itération :

- calcul d'un pas moyen global maximum ($\beta_{\text{TCC-Complete-max}}$) relatif à ladite poussée maximale utilisable et audit couple maximum admissible pour ladite hélice (10) pour ladite vitesse d'avancement courante dudit hélicoptère hybride (1), ledit pas moyen global maximum ($\beta_{\text{TCC-Complete-max}}$) de ladite hélice (10) étant défini en fonction dudit pas maximum ($\beta_{\text{Thrust-max}}$) relatif à ladite poussée maximale utilisable de ladite hélice (10) et dudit pas maximum ($\beta_{\text{Torque-max}}$) de la dite hélice (10) relatif audit couple maximum admissible de la dite hélice (10), et
- calcul d'un pas moyen global minimum ($\beta_{\text{TCC-Complete-min}}$) relatif à ladite poussée minimale utilisable et audit couple minimum admissible pour ladite hélice (10) pour ladite vitesse d'avancement courante dudit hélicoptère hybride (1), ledit pas moyen global minimum ($\beta_{\text{TCC-Complete-min}}$) étant défini en fonction dudit pas minimum ($\beta_{\text{Thrust-min}}$) relatif à ladite poussée minimale utilisable de la dite hélice (10) et dudit pas minimum ($\beta_{\text{Torque-min}}$) relatif audit couple minimal admissible de la dite hélice (10).

11. Procédé selon les revendications 6 et 8,
**caractérisé en ce que** ledit hélicoptère hybride (1) comportant au moins deux hélices (10,15), ledit procédé de protection en couple et en poussée d'au moins une hélice (10,15) d'un hélicoptère hybride (1) comporte les étapes suivantes à chaque itération :

- calcul d'un pas moyen global maximum ($\beta_{\text{TCC-Complete-max}}$) relatif à ladite poussée maximale utilisable et audit couple maximum admissible pour lesdites hélices (10,15) pour ladite vitesse d'avancement courante dudit hélicoptère hybride (1), ledit pas moyen global maximum ($\beta_{\text{TCC-Complete-max}}$) desdites hélices (10,15) étant défini en fonction dudit pas maximum ($\beta_{\text{Thrust-max}}$) relatif à ladite poussée maximale utilisable de chacune desdites hélices (10,15) et dudit pas maximum ($\beta_{\text{Torque-max}}$) relatif audit couple maximum admissible de chacune desdites hélices (10,15), et
- calcul d'un pas moyen global minimum ($\beta_{\text{TCC-Complete-min}}$) relatif à ladite poussée minimale utilisable et audit couple minimum admissible pour lesdites hélices (10,15) pour ladite vitesse d'avancement courante dudit hélicoptère hybride (1), ledit pas moyen global minimum ($\beta_{\text{TCC-Complete-min}}$) desdites hélices (10,15) étant défini en fonction dudit pas minimum ($\beta_{\text{Thrust-min}}$) relatif à ladite poussée minimale utilisable de chacune desdites hélices (10,15) et dudit pas minimum ($\beta_{\text{Torque-min}}$) relatif audit couple minimal admissible de chacune desdites hélices (10,15).

12. Procédé selon l'une quelconque des revendications 10 à 11, **caractérisé en ce que** ledit système de commande (40) comportant un calculateur de pilotage (60) recevant au moins un signal de commande de poussée émis par la commande de poussée (50), ledit calculateur de pilotage (60) pilotant au moins un actionneur (76, 77) du système de commande (40), le maintien dudit pas dans le domaine de commande (90) comporte une étape de commande dudit actionneur (76, 77) par le calculateur de pilotage (60) en fonction au moins d'une loi mémorisée ainsi qu'au moins dudit signal de commande de poussée, dudit pas moyen global maximum ($\beta_{\text{TCC-Complete-max}}$) et dudit pas moyen global minimum ($\beta_{\text{TCC-Complete-min}}$).

13. Procédé selon l'une quelconque des revendications 10 à 12, **caractérisé en ce que** ledit pas moyen global maximum ($\beta_{\text{TCC-Complete-max}}$) est égal à la valeur minimale parmi ledit pas maximum ($\beta_{\text{Thrust-max}}$) relatif à ladite poussée maximale utilisable de ladite au moins une hélice (10,15) et ledit pas maximum ($\beta_{\text{Torque-max}}$) relatif audit couple maximum admissible de ladite au moins une hélice (10,15) alors que ledit pas moyen global minimum ($\beta_{\text{TCC-Complete-min}}$) est égal à la valeur maximale parmi ledit pas minimum ($\beta_{\text{Thrust-min}}$) relatif à ladite poussée minimale utilisable de ladite au moins une hélice (10,15) et ledit pas minimum ($\beta_{\text{Torque-min}}$) relatif audit couple minimal admissible de ladite au moins une hélice (10,15).

14. Procédé selon l'une quelconque des revendications 11 à 12, **caractérisé en ce que** ledit hélicoptère hybride (1) comportant une première hélice (10) et une deuxième hélice (15), ledit système de commande (40) étant relié à des premières pales (11) de la première hélice (10) et à des deuxièmes pales (16) de la deuxième hélice (15), ladite étape de calcul d'un pas moyen global maximum ($\beta_{\text{TCC-Complete-max}}$) comporte les sous-étapes suivantes :

- mesure d'un premier pas courant ($\beta_L$) desdites premières pales (11) et d'un deuxième pas courant ($\beta_R$) desdites deuxièmes pales (16),
- calcul d'un premier pas de calcul maximum relatif à ladite poussée maximale utilisable pour ladite première hélice (10) selon la relation suivante :

$$\beta_{\text{TCC-L-Thrust-max}} = \frac{\beta_{\text{L-Thrust-max}} + \beta_R}{2},$$

$\beta_{\text{L-Thrust-max}}$ étant le pas maximum desdites premières pales (11) relatif à ladite poussée maximale utilisable pour ladite première hélice (10),
- calcul d'un deuxième pas de calcul maximum relatif à ladite poussée maximale utilisable pour ladite deuxième hélice (15) selon la relation suivante :

$$\beta_{\text{TCC-R-Thrust-max}} = \frac{\beta_L + \beta_{\text{R-Thrust-max}}}{2},$$

$\beta_{\text{R-Thrust-max}}$ étant le pas maximum desdites deuxièmes pales (16) relatif à ladite poussée maximale utilisable pour ladite deuxième hélice (15),
- calcul d'un pas moyen de calcul maximum relatif à ladite poussée maximale utilisable pour lesdites deux hélices (10,15) selon la relation suivante :

$$\beta_{\text{TCC-Thrust-max-NODIFF}} = \frac{\beta_{\text{TCC-L-Thrust-max}} + \beta_{\text{TCC-R-Thrust-max}}}{2},$$

- calcul d'un pas moyen maximum relatif à ladite poussée maximale utilisable pour lesdites deux hélices (10,15) selon la relation suivante :

$$\beta_{\text{TCC-Thrust-max}} = \beta_{\text{TCC-Thrust-max-NODIFF}} - ABS(\beta_{\text{TCC-L-Thrust-max}} - \beta_{\text{TCC-R-Thrust-max}}),$$

ABS étant une fonction extrayant la valeur absolue,
- calcul d'un premier pas de calcul maximum relatif audit couple maximum admissible pour la première hélice (10,15) selon la relation suivante :

$$\beta_{\text{TCC-L-Torque-max}} = \frac{\beta_{\text{L-Torque-max}} + \beta_R}{2},$$

$\beta_{\text{L-Torque-max}}$ étant le pas maximum desdites premières pales (11) relatif audit couple maximum admissible pour ladite première hélice (10),
- calcul d'un deuxième pas de calcul maximum relatif audit couple maximum admissible pour la deuxième hélice (15) selon la relation suivante :

$$\beta_{\text{TCC-R-Torque-max}} = \frac{\beta_L + \beta_{\text{R-Torque-max}}}{2},$$

$\beta_{\text{R-Torque-max}}$ étant le pas maximum desdites deuxièmes pales (16) relatif audit couple maximum admissible pour ladite deuxième hélice (15),
- calcul d'un pas moyen de calcul maximum relatif audit couple maximum admissible pour lesdites deux hélices (10,15) selon la relation suivante :

$$\beta_{\text{TCC-Torque-max-NODIFF}} = \frac{\beta_{\text{TCC-L-Torque-max}} + \beta_{\text{TCC-R-Torque-max}}}{2},$$

- calcul d'un pas moyen maximum relatif audit couple maximum admissible pour lesdites deux hélices (10,15) selon la relation suivante :

$$\beta_{\text{TCC-Torque-max}} = \beta_{\text{TCC-Torque-max-NODIFF}} - ABS(\beta_{\text{TCC-L-Torque-max}} - \beta_{\text{TCC-R-Torque-max}}),$$

- Calcul dudit pas moyen global maximum relatif à ladite poussée maximale utilisable et au couple maximum admissible pour lesdites deux hélices (10,15) selon la relation suivante :

$$\beta_{\text{TCC-Complete-max}} = MIN(\beta_{\text{TCC-Thrust-max}}; \beta_{\text{TCC-Torque-max}}),$$

MIN étant une fonction extrayant la valeur minimale des deux arguments fournis en entrée,

ladite étape de calcul d'un pas moyen global minimum ($\beta_{\text{TCC-Complete-min}}$) comporte les sous-étapes suivantes :

- mesure dudit premier pas courant ($\beta_L$) desdites premières pales (11) et dudit deuxième pas courant ($\beta_R$) desdites deuxièmes pales (16),
- calcul d'un premier pas de calcul minimum relatif à ladite poussée minimale utilisable pour ladite première hélice (10) selon la relation suivante :

$$\beta_{\text{TCC-L-Thrust-min}} = \frac{\beta_{\text{L-Thrust-min}} + \beta_R}{2},$$

$\beta_{\text{L-Thrust-min}}$ étant le pas minimum desdites premières pales (11) relatif à ladite poussée minimale utilisable pour ladite première hélice (10),
- calcul d'un deuxième pas de calcul minimum relatif à ladite poussée minimale utilisable pour ladite deuxième hélice (15) selon la relation suivante :

$$\beta_{\text{TCC-R-Thrust-min}} = \frac{\beta_L + \beta_{\text{R-Thrust-min}}}{2},$$

$\beta_{\text{R-Thrust-min}}$ étant le pas minimum desdites deuxièmes pales (16) relatif à ladite poussée minimale utilisable pour ladite deuxième hélice (15),

- calcul d'un pas moyen de calcul minimum relatif à ladite poussée minimale utilisable pour lesdites deux hélices (10,15) selon la relation suivante :

$$\beta_{\text{TCC-Thrust-min-NODIFF}} = \frac{\beta_{\text{TCC-L-Thrust-min}} + \beta_{\text{TCC-R-Thrust-min}}}{2},$$

- calcul d'un pas moyen minimum relatif à ladite poussée minimale utilisable pour lesdites deux hélices (10,15) selon la relation suivante :

$$\beta_{\text{TCC-Thrust-min}} = \beta_{\text{TCC-Thrust-min-NODIFF}} + ABS(\beta_{\text{TCC-L-Thrust-min}} - \beta_{\text{TCC-R-Thrust-min}}),$$

- calcul d'un premier pas de calcul minimum relatif audit couple minimum admissible pour ladite première hélice (10) selon la relation suivante :

$$\beta_{\text{TCC-L-Torque-min}} = \frac{\beta_{\text{L-Torque-min}} + \beta_R}{2},$$

$\beta_{\text{L-Torque-min}}$ étant le pas minimum desdites premières pales (11) relatif audit couple minimum admissible pour ladite première hélice (10),

- calcul d'un deuxième pas de calcul minimum relatif audit couple minimum admissible pour ladite deuxième hélice (15) selon la relation suivante :

$$\beta_{\text{TCC-R-Torque-min}} = \frac{\beta_L + \beta_{\text{R-Torque-min}}}{2},$$

$\beta_{\text{R-Torque-min}}$ étant le pas minimum desdites deuxièmes pales (16) relatif audit couple minimum admissible pour ladite deuxième hélice (15),

- calcul d'un pas moyen de calcul minimum relatif audit couple minimum admissible pour lesdites deux hélices (10,15) selon la relation suivante :

$$\beta_{\text{TCC-Torque-min-NODIFF}} = \frac{\beta_{\text{TCC-L-Torque-min}} + \beta_{\text{TCC-R-Torque-min}}}{2},$$

- calcul d'un pas moyen minimum relatif audit couple minimum admissible pour lesdites deux hélices (10,15) selon la relation suivante :

$$\beta_{\text{TCC-Torque-min}} = \beta_{\text{TCC-Torque-min-NODIFF}} + ABS(\beta_{\text{TCC-L-Torque-min}} - \beta_{\text{TCC-R-Torque-min}}),$$

- calcul dudit pas moyen global minimum relatif à ladite poussée minimale utilisable et au couple minimum admissible pour lesdites deux hélices (10,15) selon la relation suivante :

$$\beta_{\text{TCC-Complete-min}} = MAX(\beta_{\text{TCC-Thrust-min}}; \beta_{\text{TCC-Torque-min}}),$$

MAX étant une fonction extrayant la valeur maximale des deux arguments fournis en entrée.

**15.** Procédé selon l'une quelconque des revendications 10 à 14, **caractérisé en ce que** lesdites étapes de calcul dudit pas moyen global maximum ($\beta_{\text{TCC-Complete-max}}$) et dudit pas moyen global minimum ($\beta_{\text{TCC-Complete-min}}$) comportent une étape de correction selon un taux de lacet dudit hélicoptère hybride (1) pour chacune desdites première et deuxième hélices (10,15) dudit pas maximum et dudit pas minimum relatifs à ladite poussée utilisable et dudit pas maximum et dudit pas minimum relatifs audit couple admissible, de sorte que :

- lesdits premier et deuxième pas maximum relatifs à ladite poussée maximale utilisable sont remplacés respectivement par $\beta_{\text{L-Thrust-max}} + \dfrac{r.Y_p.\pi}{180.k.\Omega.R}$ et $\beta_{\text{R-Thrust-max}} - \dfrac{r.Y_p.\pi}{180.k.\Omega.R}$ ,

- lesdits premier et deuxième pas maximum relatifs audit couple maximum admissible sont remplacés respectivement par $\beta_{\text{L-Torque-max}} + \dfrac{r.Y_p.\pi}{180.k.\Omega.R}$ et $\beta_{\text{R-Torque-max}} - \dfrac{r.Y_p.\pi}{180.k.\Omega.R}$ ,

- lesdits premier et deuxième pas minimum relatifs à ladite poussée minimale utilisable sont remplacés respectivement par $\beta_{\text{L-Thrust-min}} + \dfrac{r.Y_p.\pi}{180.k.\Omega.R}$ et $\beta_{\text{R-Thrust-min}} - \dfrac{r.Y_p.\pi}{180.k.\Omega.R}$ , et

- lesdits premier et deuxième pas minimum relatifs audit couple minimum admissible sont remplacés respectivement par $\beta_{\text{L-Torque-min}} + \dfrac{r.Y_p.\pi}{180.k.\Omega.R}$ et $\beta_{\text{R-Torque-min}} - \dfrac{r.Y_p.\pi}{180.k.\Omega.R}$ ,

avec :

$r$ : vitesse de rotation en lacet de l'hélicoptère hybride, exprimée en degré par seconde (°/s),
$Yp$ : bras de levier en lacet des hélices, exprimé en mètre (m),
$\pi$ : une constante trigonométrique,
$\Omega$ : vitesse de rotation des hélices, exprimée en radian par seconde (rad/s),
$R$ : rayon des hélices, exprimé en mètre (m), et
$k$ : coefficient positif inférieur ou égal à 1.

**16.** Procédé selon l'une quelconque des revendications 1 à 15, **caractérisé en ce que** ledit hélicoptère hybride (1) comportant une première hélice (10) et une deuxième hélice (15) assurant une fonction d'avancement et une fonction de contrôle en lacet dudit hélicoptère hybride (1), ledit système de commande (40) étant relié à des premières pales (11) de la première hélice (10) et à des deuxièmes pales (16) de la deuxième hélice (15), ladite commande de poussée (50) étant configurée pour générer un ordre pour modifier un pas moyen d'un premier pas desdites premières pales (11) et d'un deuxième pas desdites deuxièmes pales (16) transmis au système de commande (40), ledit hélicoptère hybride (1) comportant une commande de contrôle en lacet (55) configurée pour générer un ordre pour modifier une composante de pas différentiel dudit premier pas desdites premières pales (11) et dudit deuxième pas desdites deuxièmes pales (16) transmis au système de commande (40),
ledit au moins un domaine de commande (90) étant borné par une limite haute (91) et une limite basse (92) de ladite caractéristique dans un diagramme de commande (95), ledit système de commande (40) comportant un calculateur de pilotage (60) recevant au moins un signal de commande de poussée émis par ladite commande de poussée (51) et au moins un signal de commande en lacet émis par ladite commande de contrôle en lacet (55), le pas desdites pales (11,16) d'au moins une hélice (10,15) atteignant une desdites limites (91,92) dudit domaine de commande (90), ledit calculateur de pilotage (60) pilotant au moins un actionneur (76, 77) du système de commande (40), le maintien dudit pas dans le domaine de commande (90) comporte une étape de commande dudit actionneur (76, 77) par le calculateur de pilotage (60) en fonction au moins d'une loi mémorisée ainsi qu'au moins dudit signal de commande de poussée et dudit signal de commande en lacet afin de modifier ledit pas moyen desdits pas desdites pales (11,16) desdites hélices (10,15) de sorte à éloigner ledit pas desdites pales (11,16) d'au moins une hélice (10,15) ayant atteint une desdites limites (91,92) et à permettre de modifier ledit pas différentiel desdits pas desdites pales (11,16) desdites hélices (10,15) conformément audit signal de commande en lacet sans sortir du domaine de commande (90).

**17.** Hélicoptère hybride (1) muni d'un rotor de sustentation (2) et d'au moins une hélice (10,15), ledit hélicoptère hybride (1) comportant un système de commande (40) relié aux pales (11,16) de ladite au moins une hélice (10,15), ledit hélicoptère hybride (1) ayant une commande de poussée (50) configurée pour générer un ordre pour modifier un pas desdites pales (11,16) transmis au système de commande (40),
**caractérisé en ce que** ledit système de commande (40) est configuré pour appliquer le procédé selon l'une quelconque des revendications 1 à 16.

**Patentansprüche**

1. Verfahren zum Drehmoment- und/oder Schubschutz mindestens eines Propellers (10, 15) eines Hybridhubschraubers (1), wobei der Hybridhubschrauber (1) einen Auftriebsrotor (2) und mindestens einen Propeller (10, 15) aufweist, wobei der Hybridhubschrauber (1) ein Steuersystem (40) umfasst, das mit Blättern (11, 16) des mindestens einen Propellers (10, 15) verbunden ist, wobei der Hybridhubschrauber (1) eine Schubsteuerung (50) aufweist, die konfiguriert ist, um einen Befehl zum Ändern einer Steigung der Blätter (11, 16) zu erzeugen, der an das Steuersystem (40) übertragen wird, wobei die Blätter (11, 16) des mindestens einen Propellers (10, 15) durch eine mechanische Antriebskette des Hybridhubschraubers (1) drehangetrieben werden, wobei das Verfahren den folgenden Schritt umfasst:

   - Halten der Steigung der Blätter (11, 16) des mindestens einen Propellers (10, 15) durch das Steuersystem (40) in mindestens einem auf ein Merkmal des mindestens einen Propellers (10, 15) bezogenen Steuerbereich (90), der durch Grenzen des Merkmals definiert ist, wobei das Merkmal ein von dem mindestens einen Propeller (10, 15) erzeugter Schub oder ein in der mechanischen Antriebskette ausgeübtes Drehmoment ist,

   **dadurch gekennzeichnet, dass** der mindestens eine Steuerbereich (90) in einem Steuerdiagramm (95) , in dem die Steigung der Blätter (11, 16) eines Propellers (10, 15) auf der Abszisse und das Merkmal des Propellers (10, 15) auf der Ordinate aufgetragen ist, durch eine obere Grenze (91) und eine untere Grenze (92) des Merkmals begrenzt ist, wobei das Steuerdiagramm (95) einen Satz von Kurven für verschiedene Vorwärtsgeschwindigkeiten des Hybridhubschraubers (1) umfasst, und der Schritt des Haltens der Steigung in dem Steuerbereich (90) durch das Steuersystem (40) bei jeder Iteration die folgenden Schritte umfasst:

   - Halten der Steigung der Blätter (11, 16) unterhalb der oberen Grenze (91) in Abhängigkeit von der Vorwärtsgeschwindigkeit des Hybridhubschraubers (1), und
   - Halten der Steigung der Blätter (11, 16) oberhalb der unteren Grenze (92) in Abhängigkeit von der Vorwärtsgeschwindigkeit des Hybridhubschraubers (1).

2. Verfahren nach Anspruch 1,
   **dadurch gekennzeichnet, dass** das Halten der Steigung unterhalb der oberen Grenze (91), wenn die Steigung der Blätter (11, 16) die obere Grenze (91) erreicht, bei jeder Iteration den folgenden Schritt umfasst:

   - Verringern des Betrags der Steigung, wenn die Vorwärtsgeschwindigkeit des Hybridhubschraubers (1) im Vergleich zu der Vorwärtsgeschwindigkeit, die erreicht wird, wenn die Steigung der Blätter (11, 16) die obere Grenze (91) erreicht, abnimmt.

3. Verfahren nach einem der Ansprüche 1 bis 2,
   **dadurch gekennzeichnet, dass** das Halten der Steigung unterhalb der oberen Grenze (91), wenn die Steigung der Blätter (11, 16) die obere Grenze (91) erreicht, bei jeder Iteration den folgenden Schritt umfasst:

   - Verhindern einer Erhöhung des Betrags der Steigung, wenn die Vorwärtsgeschwindigkeit des Hybridhubschraubers (1) nicht über die Vorwärtsgeschwindigkeit ansteigt, die erreicht wird, wenn die Steigung der Blätter (11, 16) die obere Grenze (91) erreicht.

4. Verfahren nach einem der Ansprüche 1 bis 3,
   **dadurch gekennzeichnet, dass** das Halten der Steigung oberhalb der unteren Grenze (92), wenn die Steigung der Blätter (11, 16) die untere Grenze (92) erreicht, bei jeder Iteration den folgenden Schritt umfasst:

   - Erhöhen der Steigung, wenn die Vorwärtsgeschwindigkeit des Hybridhubschraubers (1) im Vergleich zu der Vorwärtsgeschwindigkeit, die erreicht wird, wenn die Steigung der Blätter (11, 16) die untere Grenze (92) erreicht, ansteigt.

5. Verfahren nach einem der Ansprüche 1 bis 4,
   **dadurch gekennzeichnet, dass** das Halten der Steigung über der unteren Grenze (92), wenn die Steigung der Blätter (11, 16) eines Propellers (10, 15) die untere Grenze (92) erreicht, bei jeder Iteration den folgenden Schritt umfasst:

- Verhindern einer Verringerung der Steigung, wenn die Vorwärtsgeschwindigkeit des Hybridhubschraubers (1) nicht unter die Vorwärtsgeschwindigkeit sinkt, die erreicht wird, wenn die Steigung der Blätter (11, 16) die untere Grenze (92) erreicht.

6. Verfahren nach einem der Ansprüche 1 bis 5,
**dadurch gekennzeichnet, dass** der Schritt des Haltens der Steigung innerhalb des Steuerbereichs (90) durch das Steuersystem (40), wenn das Merkmal das in der mechanischen Übertragungskette ausgeübte Drehmoment ist, bei jeder Iteration die folgenden Schritte umfasst:

- Berechnen einer maximalen Steigung ($\beta_{Torque-max}$) der Blätter (11, 16) in Bezug auf ein maximal zulässiges Drehmoment für eine aktuelle Vorwärtsgeschwindigkeit des Hybridhubschraubers (1), und
- Berechnen einer minimalen Steigung ($\beta_{Torque-min}$) der Blätter (11, 16) in Bezug auf ein minimal zulässiges Drehmoment für die aktuelle Vorwärtsgeschwindigkeit des Hybridhubschraubers (1).

7. Verfahren nach Anspruch 6,
**dadurch gekennzeichnet, dass** das Steuersystem (40) einen Steuerrechner (60) umfasst, der mindestens ein von der Schubsteuerung (50) gesendetes Schubsteuersignal empfängt, wobei der Steuerrechner (60) mindestens einen Aktuator (76, 77) des Steuersystems (40) steuert, wobei das Halten der Steigung im Steuerbereich (90) einen Schritt des Steuerns des Aktuators (76, 77) durch den Steuerrechner (60) in Abhängigkeit von mindestens einer gespeicherten Regel sowie von mindestens dem Schubsteuersignal, der maximalen Steigung ($\beta_{Torque-max}$) und der minimalen Steigung ($\beta_{Torque-min}$) umfasst.

8. Verfahren nach einem der Ansprüche 1 bis 7,
**dadurch gekennzeichnet, dass** der Schritt des Haltens der Steigung in dem Steuerbereich (90) durch das Steuersystem (40), wenn das Merkmal der Schub ist, bei jeder Iteration die folgenden Schritte umfasst:

- Berechnen einer maximalen Steigung ($\beta_{Thrust-max}$) der Blätter (11, 16) in Bezug auf einen für eine aktuelle Vorwärtsgeschwindigkeit des Hybridhubschraubers (1) brauchbaren maximalen Schub, und
- Berechnen einer minimalen Steigung ($\beta_{Thrust-min}$) der Blätter (11, 16) in Bezug auf einen für die aktuelle Vorwärtsgeschwindigkeit des Hybridhubschraubers (1) brauchbaren minimalen Schub.

9. Verfahren nach Anspruch 8,
**dadurch gekennzeichnet, dass** das Steuersystem (40) einen Steuerrechner (60) umfasst, der mindestens ein von der Schubsteuerung (50) ausgegebenes Schubsteuersignal empfängt, wobei der Steuerrechner (60) mindestens einen Aktuator (76, 77) des Steuersystems (40) steuert, wobei das Halten der Steigung im Steuerbereich (90) einen Schritt des Steuerns des Aktuators (76, 77) durch den Steuerrechner (60) in Abhängigkeit von mindestens einer gespeicherten Regel sowie mindestens dem Schubsteuersignal, der maximalen Steigung ($\beta_{Thrust-max}$) und der minimalen Steigung ($\beta_{Thrust-min}$) umfasst.

10. Verfahren nach den Ansprüchen 6 und 8,
**dadurch gekennzeichnet, dass** der Hybridhubschrauber (1) einen einzigen Propeller (10) aufweist, wobei das Verfahren zum Drehmoment- und Schubschutz von mindestens einem Propeller (10, 15) eines Hybridhubschraubers (1) bei jeder Iteration die folgenden Schritte umfasst:

- Berechnen einer maximalen globalen mittleren Steigung ($\beta_{TCC-Complete-max}$) in Bezug auf den maximal brauchbaren Schub und das maximal zulässige Drehmoment für den Propeller (10) bei der aktuellen Vorwärtsgeschwindigkeit des Hybridhubschraubers (1), wobei die maximale globale mittlere Steigung ($\beta_{TCC-Complete-max}$) des Propellers (10) als Funktion der maximalen Steigung ($\beta_{Thrust-max}$) in Bezug auf den maximalen brauchbaren Schub des Propellers (10) und der maximalen Steigung ($\beta_{Torque-max}$) des Propellers (10) in Bezug auf das maximal zulässige Drehmoment des Propellers (10) definiert wird, und
- Berechnen einer minimalen globalen mittleren Steigung ($\beta_{TCC-Complete-min}$) in Bezug auf den minimal brauchbaren Schub und das minimal zulässige Drehmoment für den Propeller (10) bei der aktuellen Vorwärtsgeschwindigkeit des Hybridhubschraubers (1), wobei die minimale globale mittlere Steigung ($\beta_{TCC-Complete-min}$) als eine Funktion der minimalen Steigung ($\beta_{Thrust-min}$) in Bezug auf den minimalen brauchbaren Schub des Propellers (10) und der minimalen Steigung ($\beta_{Torque-min}$) in Bezug auf das minimal zulässige Drehmoment des Propellers (10) definiert wird.

**11.** Verfahren nach den Ansprüchen 6 und 8,
**dadurch gekennzeichnet, dass** der Hybridhubschrauber (1) mindestens zwei Propeller (10, 15) aufweist, wobei das Verfahren zum Drehmoment- und Schubschutz von mindestens einem Propeller (10, 15) eines Hybridhubschraubers (1) bei jeder Iteration die folgenden Schritte umfasst:

- Berechnen einer maximalen globalen mittleren Steigung ($\beta_{TCC\text{-}Complete\text{-}max}$) in Bezug auf den maximal brauchbaren Schub und das maximal zulässige Drehmoment für die Propeller (10, 15) bei der aktuellen Vorwärtsgeschwindigkeit des Hybridhubschraubers (1), wobei die maximale globale mittlere Steigung ($\beta_{TCC\text{-}Complete\text{-}max}$) der Propeller (10, 15) als Funktion der maximalen Steigung ($\beta_{Thrust\text{-}max}$) in Bezug auf den maximal brauchbaren Schub für jeden der Propeller (10, 15) und der maximalen Steigung ($\beta_{Torque\text{-}max}$) in Bezug auf das maximal zulässige Drehmoment eines jeden der Propeller (10, 15) definiert wird, und
- Berechnen einer minimalen globalen mittleren Steigung ($\beta_{TCC\text{-}Complete\text{-}min}$) in Bezug auf den minimal brauchbaren Schub und das minimal zulässige Drehmoment für die Propeller (10,15) für die aktuelle Vorwärtsgeschwindigkeit des Hybridhubschraubers (1), wobei die minimale globale mittlere ($\beta_{TCC\text{-}Complete\text{-}min}$) der Propeller (10, 15) als Funktion der minimalen Steigung ($\beta_{Thrust\text{-}min}$) in Bezug auf den minimal brauchbaren Schub für jeden der Propeller (10, 15) und der minimalen Steigung ($\beta_{Torque\text{-}min}$) in Bezug auf das minimal zulässige Drehmoment für jeden der Propeller (10, 15) definiert wird.

**12.** Verfahren nach einem der Ansprüche 10 bis 11,

**dadurch gekennzeichnet, dass** das Steuersystem (40) einen Steuerrechner (60) umfasst, der mindestens ein von der Schubsteuerung (50) ausgegebenes Schubsteuersignal empfängt, der Steuerrechner (60) mindestens einen Aktuator (76, 77) des Steuersystems (40) steuert, das Halten der Steigung im Steuerbereich (90) einen Schritt des Steuerns des Aktuators (76, 77) durch den Steuerrechner (60) in Abhängigkeit von mindestens einer gespeicherten Regel sowie mindestens dem Schubsteuersignal, der maximalen globalen mittleren Steigung ($\beta_{TCC\text{-}Complete\text{-}max}$) und der minimalen globalen mittleren Steigung ($\beta_{TCC\text{-}Complete\text{-}min}$) umfasst.

**13.** Verfahren nach einem der Ansprüche 10 bis 12,
**dadurch gekennzeichnet, dass** die maximale globale mittlere Steigung ($\beta_{TCC\text{-}Complete\text{-}max}$) gleich dem Minimalwert der maximalen Steigung ($\beta_{Thrust\text{-}max}$) in Bezug auf den maximal brauchbaren Schub des mindestens einen Propellers (10, 15) und der maximalen Steigung ($\beta_{Torque\text{-}max}$) in Bezug auf das maximal zulässige Drehmoment des mindestens einen Propellers (10, 15) ist, während die minimale globale mittlere Steigung ($\beta_{TCC\text{-}Complete\text{-}min}$) gleich dem Maximalwert der minimalen Steigung ($\beta_{Thrust\text{-}min}$) in Bezug auf den minimal brauchbaren Schub des mindestens einen Propellers (10, 15) und der minimalen Steigung ($\beta_{Torque\text{-}min}$) in Bezug auf das minimal zulässige Drehmoment des mindestens einen Propellers (10, 15) ist.

**14.** Verfahren nach einem der Ansprüche 11 bis 12,
**dadurch gekennzeichnet, dass** der Hybridhubschrauber (1) einen ersten Propeller (10) und einen zweiten Propeller (15) umfasst, wobei das Steuersystem (40) mit ersten Blättern (11) des ersten Propellers (10) und mit zweiten Blättern (16) des zweiten Propellers (15) verbunden ist, wobei der Schritt des Berechnens einer maximalen globalen mittleren Steigung ($\beta_{TCC\text{-}Complete\text{-}max}$) die folgenden Unterschritte umfasst:

- Messen einer ersten aktuellen Steigung ($\beta_L$) der ersten Blätter (11) und einer zweiten aktuellen Steigung ($\beta_R$) der zweiten Blätter (16),
- Berechnen einer ersten maximalen Berechnungssteigung in Bezug auf den maximal brauchbaren Schub für den ersten Propeller (10) gemäß der folgenden Beziehung:

$$\beta_{TCC\text{-}L\text{-}Thrust\text{-}max} = \frac{\beta_{L\text{-}Thrust\text{-}max} + \beta_R}{2},$$

wobei $\beta_{L\text{-}Thrust\text{-}max}$ die maximale Steigung der ersten Blätter (11) in Bezug auf den maximal brauchbaren Schub für den ersten Propeller (10) ist,
- Berechnen einer zweiten maximalen Berechnungssteigung in Bezug auf den maximal brauchbaren Schub für den zweiten Propeller (15) gemäß der folgenden Beziehung:

$$\beta_{\text{TCC−R−Thrust−max}} = \frac{\beta_L + \beta_{\text{R−Thrust−max}}}{2},$$

wobei $\beta_{\text{R-Thrust-max}}$ die maximale Steigung der zweiten Blätter (16) in Bezug auf den maximal brauchbaren Schub für den zweiten Propeller (15) ist,
- Berechnen einer mittleren maximalen Berechnungssteigung in Bezug zu dem maximal brauchbaren Schub für die beiden Propeller (10, 15) gemäß der folgenden Beziehung:

$$\beta_{\text{TCC−Thrust−max−NODIFF}} = \frac{\beta_{\text{TCC−L−Thrust−max}} + \beta_{\text{TCC−R−Thrust−max}}}{2},$$

- Berechnen einer maximalen mittleren Steigung in Bezug auf den maximal brauchbaren Schub für die beiden Propeller (10, 15) gemäß der folgenden Beziehung:

$$\beta_{\text{TCC−Thrust−max}} = \beta_{\text{TCC−Thrust−max−NODIFF}} − ABS(\beta_{\text{TCC−L−Thrust−max}} −$$

$$\beta_{\text{TCC−R−Thrust−max}}),$$

wobei ABS eine Funktion ist, die den Absolutwert bestimmt,
- Berechnen einer ersten maximalen Berechnungssteigung in Bezug auf das maximal zulässige Drehmoment für den ersten Propeller (10, 15) gemäß der folgenden Beziehung:

$$\beta_{\text{TCC−L−Torque−max}} = \frac{\beta_{\text{L−Torque−max}} + \beta_R}{2},$$

wobei $\beta_{\text{L-Torque-max}}$ die maximale Steigung der ersten Blätter (11) in Bezug auf das maximal zulässige Drehmoment für den ersten Propeller (10) ist,
- Berechnen einer zweiten maximalen Berechnungssteigung relativ zu dem maximal zulässigen Drehmoment für den zweiten Propeller (15) gemäß der folgenden Beziehung:

$$\beta_{\text{TCC−R−Torque−max}} = \frac{\beta_L + \beta_{\text{R−Torque−max}}}{2},$$

wobei $\beta_{\text{R-Torque-max}}$ die maximale Steigung der zweiten Blätter (16) in Bezug auf das maximal zulässige Drehmoment für den zweiten Propeller (15) ist,
- Berechnen einer maximalen mittleren Berechnungssteigung relativ zu dem maximal zulässigen Drehmoment für die beiden Propeller (10, 15) gemäß der folgenden Beziehung:

$$\beta_{\text{TCC−Torque−max−NODIFF}} = \frac{\beta_{\text{TCC−L−Torque−max}} + \beta_{\text{TCC−R−Torque−max}}}{2},$$

- Berechnen einer maximalen mittleren Steigung in Bezug auf das maximal zulässige Drehmoment für die beiden Propeller (10, 15) gemäß der folgenden Beziehung :

$$\beta_{\text{TCC−Torque−max}} = \beta_{\text{TCC−Torque−max−NODIFF}} − ABS(\beta_{\text{TCC−L−Torque−max}} −$$

$$\beta_{\text{TCC−R−Torque−max}}),$$

- Berechnen der maximalen globalen mittleren Steigung in Bezug auf den maximal brauchbaren Schub und das maximal zulässige Drehmoment für die beiden Propeller (10, 15) gemäß der folgenden Beziehung:

$$\beta_{\text{TCC-Complete-max}} = MIN(\beta_{\text{TCC-Thrust-max}}; \beta_{\text{TCC-Torque-max}}),$$

wobei MIN eine Funktion ist, die den Minimalwert der beiden als Eingabe gelieferten Argumente bestimmt,

wobei der Schritt des Berechnens einer minimalen globalen mittleren Steigung ($\beta_{\text{Tcc-complete-min}}$) die folgenden Unterschritte umfasst:

- Messen der ersten aktuellen Steigung ($\beta_L$) der ersten Blätter (11) und der zweiten aktuellen Steigung ($\beta_R$) der zweiten Blätter (16),
- Berechnen einer ersten minimalen Berechnungssteigung in Bezug auf den für den ersten Propeller (10) minimal brauchbaren Schub gemäß der folgenden Beziehung:

$$\beta_{\text{TCC-L-Thrust-min}} = \frac{\beta_{\text{L-Thrust-min}} + \beta_R}{2},$$

wobei $\beta_{\text{L-Thrust-min}}$ die minimale Steigung der ersten Blätter (11) in Bezug auf den minimal brauchbaren Schub für den ersten Propeller (10) ist,
- Berechnen einer zweiten minimalen Berechnungssteigung in Bezug auf den für den zweiten Propeller (15) minimal brauchbaren Schub gemäß der folgenden Beziehung:

$$\beta_{\text{TCC-R-Thrust-min}} = \frac{\beta_L + \beta_{\text{R-Thrust-min}}}{2},$$

wobei $\beta_{\text{R-Thrust-min}}$ die minimale Steigung der zweiten Blätter (16) in Bezug auf den minimal brauchbaren Schub für den zweiten Propeller (15) ist,
- Berechnen einer mittleren Mindestberechnungssteigung relativ zu dem für die beiden Propeller (10, 15) minimal brauchbaren Schub gemäß der folgenden Beziehung:

$$\beta_{\text{TCC-Thrust-min-NODIFF}} = \frac{\beta_{\text{TCC-L-Thrust-min}} + \beta_{\text{TCC-R-Thrust-min}}}{2},$$

- Berechnen einer minimalen mittleren Steigung in Bezug auf den minimal brauchbaren Schub für die beiden Propeller (10, 15) gemäß der folgenden Beziehung:

$$\beta_{\text{TCC-Thrust-min}} = \beta_{\text{TCC-Thrust-min-NODIFF}} + ABS(\beta_{\text{TCC-L-Thrust-min}} - \beta_{\text{TCC-R-Thrust-min}}),$$

- Berechnen einer ersten minimalen Berechnungssteigung in Bezug auf das für den ersten Propeller (10) minimal zulässige Drehmoment gemäß der folgenden Beziehung:

$$\beta_{\text{TCC-L-Torque-min}} = \frac{\beta_{\text{L-Torque-min}} + \beta_R}{2},$$

wobei $\beta_{\text{L-Torque-min}}$ die minimale Steigung der ersten Blätter (11) bezüglich des minimal zulässigen Drehmoments für den ersten Propeller (10) ist,
- Berechnen einer zweiten minimalen Berechnungssteigung in Bezug auf das für den zweiten Propeller (15) minimal zulässige Drehmoment gemäß der folgenden Beziehung:

$$\beta_{\text{TCC-R-Torque-min}} = \frac{\beta_L + \beta_{\text{R-Torque-min}}}{2},$$

wobei $\beta_{R\text{-Torque-min}}$ die minimale Steigung der zweiten Blätter (16) in Bezug auf das minimal zulässige Drehmoment für den zweiten Propeller (15) ist,

- Berechnen einer minimalen mittleren Berechnungssteigung in Bezug auf das zulässige Mindestdrehmoment für die beiden Propeller (10, 15) gemäß der folgenden Beziehung :

$$\beta_{\text{TCC-Torque-min-NODIFF}} = \frac{\beta_{\text{TCC-L-Torque-min}} + \beta_{\text{TCC-R-Torque-min}}}{2},$$

- Berechnen einer minimalen mittleren Steigung in Bezug auf das minimal zulässige Drehmoment für die genannten beiden Propeller (10, 15) gemäß der folgenden Beziehung :

$$\beta_{\text{TCC-Torque-min}} = \beta_{\text{TCC-Torque-min-NODIFF}} + ABS(\beta_{\text{TCC-L-Torque-min}} - \beta_{\text{TCC-R-Torque-min}}),$$

- Berechnen der minimalen globalen mittleren Steigung in Bezug auf den minimal brauchbaren Schub und das minimal zulässige Drehmoment für die beiden Propeller (10, 15) gemäß der folgenden Beziehung:

$$\beta_{\text{TCC-Complete-min}} = MAX(\beta_{\text{TCC-Thrust-min}}; \beta_{\text{TCC-Torque-min}}),$$

wobei MAX eine Funktion ist, die den Maximalwert aus den beiden als Eingabe gelieferten Argumenten bestimmt.

**15.** Verfahren nach einem der Ansprüche 10 bis 14,
**dadurch gekennzeichnet, dass** die Schritte zum Berechnen der maximalen globalen mittleren Steigung ($\beta_{\text{TCC-Complete-max}}$) und der minimalen globalen mittleren Steigung ($\beta_{\text{TCC-Complete-min}}$) einen Schritt des Korrigierens der maximalen Steigung und der minimalen Steigung in Bezug auf den maximal brauchbaren Schub sowie der maximalen Steigung und der minimalen Steigung in Bezug auf das zulässige Drehmoment anhand einer Gierrate des Hybridhubschraubers für den ersten und den zweiten Propeller (10, 15) umfassen, so dass

- die erste und die zweite maximale Steigung in Bezug auf den maximal brauchbaren Schub durch

$$\beta_{\text{L-Thrust-max}} + \frac{r.Y_p.\pi}{180.k.\Omega.R} \text{ bzw. } \beta_{\text{R-Thrust-max}} - \frac{r.Y_p.\pi}{180.k.\Omega.R} \text{ ersetzt werden,}$$

- die erste und zweite maximale Steigung in Bezug auf das maximal zulässige Drehmoment durch

$$\beta_{\text{L-Torque-max}} + \frac{r.Y_p.\pi}{180.k.\Omega.R} \text{ bzw. } \beta_{\text{R-Torque-max}} - \frac{r.Y_p.\pi}{180.k.\Omega.R} \text{ ersetzt werden;}$$

- die erste und zweite minimale Steigung in Bezug auf den minimal brauchbaren Schub durch

$$\beta_{\text{L-Thrust-min}} + \frac{r.Y_p.\pi}{180.k.\Omega.R} \text{ bzw. } \beta_{\text{R-Thrust-min}} - \frac{r.Y_p.\pi}{180.k.\Omega.R} \text{ ersetzt werden;}$$

- die erste und zweite minimale Steigung in Bezug auf das minimal zulässige Drehmoment durch

$$\beta_{\text{L-Torque-min}} + \frac{r.Y_p.\pi}{180.k.\Omega.R} \text{ bzw. } \beta_{\text{R-Torque-min}} - \frac{r.Y_p.\pi}{180.k.\Omega.R} \text{ ersetzt werden, wobei}$$

r: die Giergeschwindigkeit des Hybridhubschraubers, ausgedrückt in Grad pro Sekunde (°/s),
Yp: der Gierhebelarm der Propeller, ausgedrückt in Metern (m),
$\pi$: eine trigonometrische Konstante,
$\Omega$: die Drehgeschwindigkeit der Propeller, ausgedrückt in Radiant pro Sekunde (rad/s),
R: der Radius der Propeller, ausgedrückt in Meter (m), und
k: ein positiver Koeffizient kleiner oder gleich 1 ist.

**16.** Verfahren nach einem der Ansprüche 1 bis 15,

**dadurch gekennzeichnet, dass** der Hybridhubschrauber (1) einen ersten Propeller (10) und einen zweiten Propeller (15) umfasst, die eine Vortriebsfunktion und eine Giersteuerfunktion des Hybridhubschraubers (1) bereitstellen, wobei das Steuersystem (40) mit ersten Blättern (11) des ersten Propellers (10) und mit zweiten Blättern (16) des zweiten Propellers (15) verbunden ist, die Schubsteuerung (50) konfiguriert ist, um einen Befehl zum Ändern einer mittleren Steigung einer ersten Steigung der ersten Blätter (11) und einer zweiten Steigung der zweiten Blätter (16) zu erzeugen, der an das Steuersystem (40) übertragen wird, wobei der Hybridhubschrauber (1) eine Giersteuerung (55) umfasst, die konfiguriert ist, um einen Befehl zur Änderung einer differenziellen Steigungskomponente der ersten Steigung der ersten Blätter (11) und der zweiten Steigung der zweiten Blätter (16) zu erzeugen, der an das Steuersystem (40) übertragen wird,

wobei in einem Steuerdiagramm (95) der mindestens eine Steuerbereich (90) durch eine obere Grenze (91) und eine untere Grenze (92) des Merkmals begrenzt ist, wobei das Steuersystem (40) einen Steuerrechner (60) umfasst, der mindestens ein von der Schubsteuerung (51) ausgegebenes Schubsteuersignal und mindestens ein von der Giersteuerung (55) ausgegebenes Giersteuersignal empfängt, wobei wenn die Steigung der Blätter (11, 16) mindestens eines Propellers (10, 15) eine der Grenzen (91, 92) des Steuerbereichs (90) erreicht, der Steuerrechner (60) mindestens einen Aktuator (76, 77) des Steuersystems (40) steuert, wobei das Halten der Steigung im Steuerbereich (90) einen Schritt des Steuerns des Aktuators (76, 77) durch den Steuerrechner (60) in Abhängigkeit von mindestens einer gespeicherten Regel sowie mindestens dem Schubsteuersignal und dem Giersteuersignal umfasst, um die mittlere Steigung der Steigungen der Blätter (11, 16) der Propeller (10, 15) so zu ändern, dass die Steigung der Blätter (11, 16) von mindestens einem Propeller (10, 15), der eine der Grenzen (91, 92) erreicht hat, wegbewegt wird, und um eine Änderung der differentiellen Steigung der Steigungen der Blätter (11, 16) der Propeller (10, 15) gemäß dem Giersteuersignal zu ermöglichen, ohne den Steuerbereich (90) zu verlassen.

17. Hybridhubschrauber (1) mit einem Auftriebsrotor (2) und mindestens einem Propeller (10, 15), wobei der Hybridhubschrauber (1) ein Steuersystem (40) aufweist, das mit den Blättern (11, 16) des mindestens einen Propellers (10, 15) verbunden ist, wobei der Hybridhubschrauber (1) eine Schubsteuerung (50) aufweist, die konfiguriert ist, um einen Befehl zum Ändern einer Steigung der Blätter (11, 16) zu erzeugen, der an das Steuersystem (40) übertragen wird,

**dadurch gekennzeichnet, dass** das Steuersystem (40) konfiguriert ist, um das Verfahren nach einem der Ansprüche 1 bis 16 anzuwenden.

**Claims**

1. Method for torque and/or thrust protection of at least one propeller (10, 15) of a hybrid helicopter (1), said hybrid helicopter (1) comprising a lift rotor (2) and at least one propeller (10, 15), said hybrid helicopter (1) comprising a control system (40) connected to blades (11, 16) of said at least one propeller (10, 15), said hybrid helicopter (1) having a thrust control (50) configured to generate an order for modifying a pitch of said blades (11, 16) transmitted to the control system (40), said blades (11, 16) of said at least one propeller (10, 15) being driven in rotation by a mechanical transmission system of said hybrid helicopter (1),

said method comprising the following step:

- the control system (40) keep said pitch of said blades (11, 16) of said at least one propeller (10, 15) within at least one control envelope (90) relating to a characteristic of said at least one propeller (10, 15) and defined by limits of said characteristic, said characteristic being a thrust generated by said at least one propeller (10, 15) or a torque exerted in said mechanical transmission system,

**characterised in that** said at least one control envelope (90) is bounded by an upper limit (91) and a lower limit (92) of said characteristic in a control diagram (95) presenting the pitch of said blades (11, 16) of a propeller (10, 15) along the abscissa axis and said characteristic of said propeller (10, 15) up the ordinate axis, said control diagram (95) comprising a set of curves for different forward speeds of said hybrid helicopter (1), and said step of having the control system (40) keep said pitch within said control envelope (90) comprises the following steps at each iteration:

- keeping said pitch of said blades (11,16) below said upper limit (91) as a function of said forward speed of said hybrid helicopter (1), and
- keeping said pitch of said blades (11,16) above said lower limit (92) as a function of said forward speed of said hybrid helicopter (1).

2. Method according to claim 1,
**characterised in that** said step of keeping said pitch below said upper limit (91) comprises, when said pitch of said blades (11, 16) reaches said upper limit (91), the following step at each iteration:

- reducing said pitch in absolute value when said forward speed of said hybrid helicopter (1) decreases relative to said forward speed reached when said pitch of said blades (11, 16) reaches said upper limit (91).

3. Method according to either claim 1 or claim 2,
**characterised in that** said step of keeping said pitch below said upper limit (91) comprises, when said pitch of said blades (11, 16) reaches said upper limit (91), the following step at each iteration:

- preventing an increase in said pitch in absolute value when said forward speed of said hybrid helicopter (1) does not increase above said forward speed reached when said pitch of said blades (11, 16) reaches said upper limit (91).

4. Method according to any of claims 1 to 3,
**characterised in that** said step of keeping said pitch above said lower limit (92) comprises, when said pitch of said blades (11, 16) reaches said lower limit (92), the following step at each iteration:

- increasing said pitch when said forward speed of said hybrid helicopter (1) increases relative to said forward speed reached when said pitch of said blades (11, 16) reaches said lower limit (92).

5. Method according to any of claims 1 to 4,
**characterised in that** said step of keeping f said pitch above said lower limit (92) comprises, when said pitch of said blades (11, 16) of a propeller (10, 15) reaches said lower limit (92), the following step at each iteration:

- preventing a decrease in said pitch when said forward speed of said hybrid helicopter (1) does not decrease below said forward speed reached when said pitch of said blades (11, 16) reaches said lower limit (92).

6. Method according to any of claims 1 to 5,
**characterised in that** said step of step of keeping said pitch within said control envelope (90) comprises, when said characteristic is said torque exerted in said mechanical transmission system, the following steps at each iteration:

- calculating a maximum pitch ($\beta_{Torque-max}$) of said blades (11, 16) relating to a maximum allowable torque for a current forward speed of said hybrid helicopter (1), and
- calculating a minimum pitch ($\beta_{Torque-min}$) of said blades (11, 16) relating to a minimum allowable torque for said current forward speed of said hybrid helicopter (1).

7. Method according to claim 6,
**characterised in that**, said control system (40) comprising a control computer (60) receiving at least one thrust control signal emitted by the thrust control (50), and said control computer (60) controlling at least one actuator (76, 77) of the control system (40), the step of keeping said pitch within the control envelope (90) comprises a step of controlling said actuator (76, 77) with the control computer (60) as a function of at least one stored law as well as at least said thrust control signal, said maximum pitch ($\beta_{Torque-max}$) and said minimum pitch ($\beta_{Torque-min}$).

8. Method according to any of claims 1 to 7,
**characterised in that** said step of keeping said pitch within said control envelope (90) comprises, when said characteristic is said thrust, the following steps at each iteration:

- calculating a maximum pitch ($\beta_{Thrust-max}$) of said blades (11, 16) relating to a maximum usable thrust for a current forward speed of said hybrid helicopter (1), and
- calculating a minimum pitch ($\beta_{Thrust-min}$) of said blades (11, 16) relating to a minimum usable thrust for said current forward speed of said hybrid helicopter (1).

9. Method according to claim 8,
**characterised in that**, said control system (40) comprising a control computer (60) receiving at least one thrust control signal emitted by the thrust control (50), and said control computer (60) controlling at least one actuator (76, 77) of the control system (40), the step of keeping said pitch within the control envelope (90) comprises a step of controlling said actuator (76, 77) with the control computer (60) as a function of at least one stored law as well as at least said thrust control signal, said maximum pitch ($\beta_{Thrust-max}$) and said minimum pitch ($\beta_{Thrust-min}$).

**10.** Method according to claims 6 and 8,
**characterised in that**, said hybrid helicopter (1) comprising a single propeller (10), said torque and thrust protection method of at least one propeller (10, 15) of a hybrid helicopter (1) comprises the following steps at each iteration:

- calculating a maximum overall average pitch ($\beta_{Tcc\text{-complete-max}}$) relating to said maximum usable thrust and to said maximum allowable torque for said propeller (10) for said current forward speed of said hybrid helicopter (1), said maximum overall average pitch ($\beta_{Tcc\text{-complete-max}}$) of said propeller (10) being defined as a function of said maximum pitch ($\beta_{Thrust\text{-max}}$) relating to said maximum usable thrust of said propeller (10) and of said maximum pitch ($\beta_{Torque\text{-max}}$) of said propeller (10) relating to said maximum allowable torque of said propeller (10), and
- calculating a minimum overall average pitch ($\beta_{TCC\text{-Complete-min}}$) relating to said minimum usable thrust and said minimum allowable torque for said propeller (10) for said current forward speed of said hybrid helicopter (1), said minimum average overall pitch ($\beta_{Tcc\text{-Complete-min}}$) being defined as a function of said minimum pitch ($\beta_{Thrust\text{-min}}$) relating to said minimum usable thrust of said propeller (10) and said minimum pitch ($\beta_{Torque\text{-min}}$) relating to said minimum allowable torque of said propeller (10).

**11.** Method according to claims 6 and 8,
**characterised in that**, said hybrid helicopter (1) comprising at least two propellers (10, 15), said torque and thrust protection method of at least one propeller (10, 15) of a hybrid helicopter (1) comprises the following steps at each iteration:

- calculating a maximum overall average pitch ($\beta_{Tcc\text{-complete-max}}$) relating to said maximum usable thrust and to said maximum allowable torque for said propellers (10, 15) for said current forward speed of said hybrid helicopter (1), said maximum overall average pitch ($\beta_{Tcc\text{-complete-max}}$) of said propellers (10, 15) being defined as a function of said maximum pitch ($\beta_{Thrust\text{-max}}$) relating to said maximum usable thrust of each of said propellers (10, 15) and of said maximum pitch ($\beta_{Torque\text{-max}}$) relating to said maximum allowable torque of each of said propellers (10, 15), and
- calculating a minimum overall average pitch ($\beta_{TCC\text{-Complete-min}}$) relating to said minimum usable thrust and to said minimum allowable torque for said propellers (10, 15) for said current forward speed of said hybrid helicopter (1), said minimum overall average pitch ($\beta_{TCC\text{-Complete-min}}$) of said propellers (10, 15) being defined as a function of said minimum pitch ($\beta_{Thrust\text{-min}}$) relating to said minimum usable thrust of each of said propellers (10, 15) and of said minimum pitch ($\beta_{Torque\text{-min}}$) relating to said minimum allowable torque of each of said propellers (10, 15).

**12.** Method according to any of claims 10 to 11,
**characterised in that**, said control system (40) comprising a control computer (60) receiving at least one thrust control signal emitted by the thrust control (50), and said control computer (60) controlling at least one actuator (76, 77) of the control system (40), the step of keeping said pitch within the control envelope (90) comprises a step of controlling said actuator (76, 77) with the control computer (60) as a function of at least one stored law as well as at least said thrust control signal, said maximum overall average pitch ($\beta_{Tcc\text{-complete-max}}$) and said minimum overall average pitch ($\beta_{Tcc\text{-Complete-min}}$).

**13.** Method according to any of claims 10 to 12,
**characterised in that** said maximum overall average pitch ($\beta_{Tcc\text{-complete-max}}$) is equal to the minimum value among said maximum pitch ($\beta_{Thrust\text{-max}}$) relating to said maximum usable thrust of said at least one propeller (10, 15) and said maximum pitch ($\beta_{Torque\text{-max}}$) relating to said maximum allowable torque of said at least one propeller (10, 15), while said minimum overall average pitch ($\beta_{Tcc\text{-Complete-min}}$) is equal to the maximum value among said minimum pitch ($\beta_{Thrust\text{-min}}$) relating to said minimum usable thrust of said at least one propeller (10, 15) and said minimum pitch ($\beta_{Torque\text{-min}}$) relating to said minimum allowable torque of said at least one propeller (10, 15).

**14.** Method according to any of claims 11 to 12,
**characterised in that** said, hybrid helicopter (1) comprising a first propeller (10) and a second propeller (15), and said control system (40) being connected to first blades (11) of the first propeller (10) and to second blades (16) of the second propeller (15), said step of calculating a maximum overall average pitch ($\beta_{Tcc\text{-complete-max}}$) comprises the following sub-steps:

- measuring a first current pitch ($\beta_L$) of said first blades (11) and a second current pitch ($\beta_R$) of said second blades (16),
- calculating a first maximum calculation pitch relating to said maximum usable thrust for said first propeller (10) according to the following relationship:

$$\beta_{\text{TCC-L-Thrust-max}} = \frac{\beta_{\text{L-Thrust-max}} + \beta_{\text{R}}}{2},$$

$\beta_{\text{L-Thrust-max}}$ being the maximum pitch of said first blades (11) relating to said maximum usable thrust for said first propeller (10),

- calculating a second maximum calculation pitch relating to said maximum usable thrust for said second propeller (15) according to the following relationship:

$$\beta_{\text{TCC-R-Thrust-max}} = \frac{\beta_{\text{L}} + \beta_{\text{R-Thrust-max}}}{2},$$

$\beta_{\text{R-Thrust-max}}$ being the maximum pitch of said second blades (16) relating to said maximum usable thrust for said second propeller (15),

- calculating a maximum average calculation pitch relating to said maximum usable thrust for said two propellers (10, 15) according to the following relationship:

$$\beta_{\text{TCC-Thrust-max-NODIFF}} = \frac{\beta_{\text{TCC-L-Thrust-max}} + \beta_{\text{TCC-R-Thrust-max}}}{2},$$

- calculating a maximum average pitch relating to said maximum usable thrust for said two propellers (10, 15) according to the following relationship:

$$\beta_{\text{TCC-Thrust-max}} = \beta_{\text{TCC-Thrust-max-NODIFF}} - ABS(\beta_{\text{TCC-L-Thrust-max}} -$$

$$\beta_{\text{TCC-R-Thrust-max}}),$$

ABS being a function extracting the absolute value,

- calculating a first maximum calculation pitch relating to said maximum allowable torque for the first propeller (10, 15) according to the following relationship:

$$\beta_{\text{TCC-L-Torque-max}} = \frac{\beta_{\text{L-Torque-max}} + \beta_{\text{R}}}{2},$$

$\beta_{\text{L-Torque-max}}$ being the maximum pitch of said first blades (11) relating to said maximum allowable torque for said first propeller (10),

- calculating a second maximum calculation pitch relating to said maximum allowable torque for the second propeller (15) according to the following relationship:

$$\beta_{\text{TCC-R-Torque-max}} = \frac{\beta_{\text{L}} + \beta_{\text{R-Torque-max}}}{2},$$

$\beta_{\text{R-Torque-max}}$ being the maximum pitch of said second blades (16) relating to said maximum allowable torque for said second propeller (15),

- calculating a maximum average calculation pitch relating to said maximum allowable torque for said two propellers (10, 15) according to the following relationship:

$$\beta_{\text{TCC-Torque-max-NODIFF}} = \frac{\beta_{\text{TCC-L-Torque-max}} + \beta_{\text{TCC-R-Torque-max}}}{2},$$

- calculating a maximum average pitch relating to said maximum allowable torque for said two propellers (10, 15) according to the following relationship:

$$\beta_{\text{TCC-Torque-max}} = \beta_{\text{TCC-Torque-max-NODIFF}} - ABS(\beta_{\text{TCC-L-Torque-max}} -$$

$$\beta_{\text{TCC-R-Torque-max}}),$$

- calculating said maximum overall average pitch relating to said maximum usable thrust and to the maximum allowable torque for said two propellers (10, 15) according to the following relationship:

$$\beta_{\text{TCC-Complete-max}} = MIN\left(\beta_{\text{TCC-Thrust-max}}; \beta_{\text{TCC-Torque-max}}\right)$$

MIN being a function extracting the minimum value of the two arguments provided as input,

and said step of calculating a minimum overall average pitch ($\beta_{\text{Tcc-Complete-min}}$) comprises the following substeps:

- measuring said first current pitch ($\beta_L$) of said first blades (11) and said second current pitch ($\beta_R$) of said second blades (16),
- calculating a first minimum calculation pitch relating to said minimum usable thrust for said first propeller (10) according to the following relationship:

$$\beta_{\text{TCC-L-Thrust-min}} = \frac{\beta_{\text{L-Thrust-min}} + \beta_R}{2},$$

$\beta_{\text{L-Thrust-min}}$ being the minimum pitch of said first blades (11) relating to said minimum usable thrust for said first propeller (10),
- calculating a second minimum calculation pitch relating to said minimum usable thrust for said second propeller (15) according to the following relationship:

$$\beta_{\text{TCC-R-Thrust-min}} = \frac{\beta_L + \beta_{\text{R-Thrust-min}}}{2},$$

$\beta_{\text{R-Thrust-min}}$ being the minimum pitch of said second blades (16) relating to said minimum usable thrust for said second propeller (15),
- calculating a minimum average calculation pitch relating to said minimum usable thrust for said two propellers (10, 15) according to the following relationship:

$$\beta_{\text{TCC-Thrust-min-NODIFF}} = \frac{\beta_{\text{TCC-L-Thrust-min}} + \beta_{\text{TCC-R-Thrust-min}}}{2},$$

- calculating a minimum average pitch relating to said minimum usable thrust for said two propellers (10, 15) according to the following relationship:

$$\beta_{\text{TCC-Thrust-min}} = \beta_{\text{TCC-Thrust-min-NODIFF}} - ABS(\beta_{\text{TCC-L-Thrust-min}} - \beta_{\text{TCC-R-Thrust-min}}),$$

- calculating a first minimum calculation pitch relating to said minimum allowable torque for said first propeller (10) according to the following relationship:

$$\beta_{\text{TCC-L-Torque-min}} = \frac{\beta_{\text{L-Torque-min}} + \beta_R}{2},$$

$\beta_{\text{L-Torque-min}}$ being the minimum pitch of said first blades (11) relating to said minimum allowable torque for said first propeller (10),
- calculating a second minimum calculation pitch relating to said minimum allowable torque for said second propeller (15) according to the following relationship:

$$\beta_{\text{TCC-R-Torque-min}} = \frac{\beta_L + \beta_{\text{R-Torque-min}}}{2},$$

$\beta_{\text{R-Torque-min}}$ being the minimum pitch of said second blades (16) relating to said minimum allowable torque for said second propeller (15),
- calculating a minimum average calculation pitch relating to said minimum allowable torque for said two propellers (10, 15) according to the following relationship:

$$\beta_{\text{TCC-Torque-min-NODIFF}} = \frac{\beta_{\text{TCC-L-Torque-min}} + \beta_{\text{TCC-R-Torque-min}}}{2},$$

- calculating a minimum average pitch relating to said minimum allowable torque for said two propellers (10, 15) according to the following relationship:

$$\beta_{\text{TCC-Torque-min}} = \beta_{\text{TCC-Torque-min-NODIFF}} - ABS\big(\beta_{\text{TCC-L-Torque-min}} -$$

$$\beta_{\text{TCC-R-Torque-min}}\big),$$

- calculating said minimum average overall pitch relating to said minimum usable thrust and to the minimum allowable torque for said two propellers (10, 15) according to the following relationship:

$$\beta_{\text{TCC-Complete-min}} = MAX\big(\beta_{\text{TCC-Thrust-min}}; \beta_{\text{TCC-Torque-min}}\big)$$

MAX being a function extracting the maximum value of the two arguments provided as input.

**15.** Method according to any of claims 10 to 14,
**characterised in that** said steps of calculating said maximum overall average pitch ($\beta_{\text{Tcc-Complete-max}}$) and said minimum average overall pitch ($\beta_{\text{Tcc-Complete-min}}$) comprise a step of correcting, according to a yaw rate of said hybrid helicopter (1), for each of said first and second propellers (10, 15), said maximum pitch and said minimum pitch relating to said usable thrust and said maximum pitch and said minimum pitch relating to said allowable torque, such that:

- said first and second maximum pitches relating to said maximum usable thrust are replaced respectively by

$$\beta_{\text{L-Thrust-max}} + \frac{r \cdot Y_p \cdot \pi}{180.k.\Omega.R} \text{ and } \beta_{\text{R-Thrust-max}} - \frac{r \cdot Y_p \cdot \pi}{180.k.\Omega.R\prime}$$

- said first and second maximum pitches relating to said maximum allowable torque are replaced respectively by $\beta_{\text{L-Torque-max}} + \frac{r \cdot Y_p \cdot \pi}{180.k.\Omega.R} \text{ and } \beta_{\text{R-Torque-max}} - \frac{r \cdot Y_p \cdot \pi}{180.k.\Omega.R\prime}$

- said first and second minimum pitches relating to said minimum usable thrust are replaced respectively by

$$\beta_{\text{L-Thrust-min}} + \frac{r \cdot Y_p \cdot \pi}{180.k.\Omega.R} \text{ and } \beta_{\text{R-Thrust-min}} - \frac{r \cdot Y_p \cdot \pi}{180.k.\Omega.R\prime} \text{ , and}$$

- said first and second minimum pitches relating to said minimum allowable torque are replaced respectively by $\beta_{\text{L-Torque-min}} + \frac{r \cdot Y_p \cdot \pi}{180.k.\Omega.R} \text{ and } \beta_{\text{R-Torque-min}} - \frac{r \cdot Y_p \cdot \pi}{180.k.\Omega.R\prime}$

where:

*r:* yaw rate of the hybrid helicopter, expressed in degrees per second (°/s),
*Yp:* yaw lever of the propellers, expressed in metres (m),
*π:* a trigonometric constant,
*Ω:* rotational speed of the propellers, expressed in radians per second (rad/s), *R:* radius of the propellers, expressed in metres (m), and
*k:* positive coefficient less than or equal to 1.

**16.** Method according to any of claims 1 to 15,

**characterised in that**, said hybrid helicopter (1) comprising a first propeller (10) and a second propeller (15) providing an advancement function and a yaw control function of said hybrid helicopter (1), said control system (40) being connected to first blades (11) of the first propeller (10) and to second blades (16) of the second propeller (15), said thrust control (50) being configured to generate an order for modifying an average pitch of a first pitch of said first blades (11) and a second pitch of said second blades (16) transmitted to the control system (40), said hybrid helicopter (1) comprising a yaw control command (55) configured to generate an order for modifying a differential pitch component of said first pitch of said first blades (11) and of said second pitch of said second blades (16) transmitted to the control system (40),

said at least one control envelope (90) being bounded by an upper limit (91) and a lower limit (92) of said characteristic in a control diagram (95), said control system (40) comprising a control computer (60) receiving at least one thrust control signal emitted by said thrust control (51) and at least one yaw control signal emitted by said yaw control (55), the pitch of said blades (11, 16) of at least one propeller (10, 15) reaching one of said limits (91, 92) of said control envelope (90), said control computer (60) controlling at least one actuator (76, 77) of the control system (40), the step of keeping said pitch within the control envelope (90) comprises a step of controlling said actuator (76, 77) with the control computer (60) as a function of least one stored law as well as at least said thrust control signal and said yaw control signal to modify said average pitch of said pitches of said blades (11, 16) of said propellers (10, 15) so as to distance said pitch of said blades (11, 16) from at least one propeller (10, 15) having reached one of said limits (91, 92) and to allow modification of said differential pitch of said pitches of said blades (11, 16) of said propellers (10, 15) in accordance with said yaw control signal without going outside the control envelope (90).

17. Hybrid helicopter (1) provided with a lift rotor (2) and at least one propeller (10, 15), said hybrid helicopter (1) comprising a control system (40) connected to the blades (11, 16) of said at least one propeller (10, 15), said hybrid helicopter (1) having a thrust control (50) configured to generate an order for modifying a pitch of said blades (11, 16) transmitted to the control system (40),

**characterised in that** said control system (40) is configured to apply the method according to any of claims 1 to 16.

# Fig.1

# Fig.2

Fig.3

Fig.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8181901 B
- US 8170728 B
- US 8052094 B
- US 8113460 B
- FR 2946315
- EP 2258615 A
- EP 2574547 A
- US 20080237392 A